(19) Europäisches Patentamt
European Patent Office
Office européen des brevets

(11) **EP 2 980 034 A1**

(12) **EUROPEAN PATENT APPLICATION**
published in accordance with Art. 153(4) EPC

(43) Date of publication:
**03.02.2016 Bulletin 2016/05**

(51) Int Cl.:
***C03C 27/12*** (2006.01)    ***B60J 1/00*** (2006.01)

(21) Application number: **14773253.1**

(22) Date of filing: **18.03.2014**

(86) International application number:
**PCT/JP2014/057303**

(87) International publication number:
**WO 2014/156822 (02.10.2014 Gazette 2014/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.03.2013 JP 2013070786**

(71) Applicant: **Konica Minolta, Inc.
Tokyo 100-7015 (JP)**

(72) Inventor: **IHARA, Kazuhito
Tokyo 100-7015 (JP)**

(74) Representative: **Gille Hrabal
Brucknerstrasse 20
40593 Düsseldorf (DE)**

(54) **LAMINATED GLASS**

(57)    A laminated glass of the present invention includes: an optical film having at least one infrared-reflecting layer on a transparent resin film; and a pair of glass substrates that sandwich the optical film, wherein the infrared-reflecting layer includes a laminate of alternating high refractive index layers containing a first water-soluble binder resin and first metal oxide particles and low refractive index layers containing a second water-soluble binder resin and second metal oxide particles, and the value obtained by dividing the thermal shrinkage rate of the optical film by the thermal shrinkage rate of the transparent resin film ranges from 1 to 3.

FIG. 1

**Description**

Technical Field

The present invention relates to a laminated glass and more particularly to a laminated glass with good infrared reflectance and light transmission while an infrared-reflecting layer in the laminated glass is prevented from being thermally damaged during production by defining the structure of the infrared-reflecting layer and the relation of the thermal shrinkage rate between an optical film and a transparent resin film.

Background Art

In recent years, a laminated glass having high heat insulation or heat ray shielding properties has been distributed in the market in order to shield heat felt by human skin due to the effect of sunlight entering from car windows and thus to reduce the vehicle air conditioning load for energy saving.

A typical laminated glass includes an optical film between a pair of glass substrates, wherein the optical film blocks transmission of heat rays (infrared rays) in the sun rays to reduce inside temperature rises and cooling load.

As such a laminated glass, a heat-insulation laminated glass has been provided which includes a heat-ray reflection film having a laminate of alternating multiple polyethylenenaphthalate (PEN) and polymethylmethacrylate (PMMA) layers between a pair of glass plates (for example, see Patent Literature 1).

A near-infrared reflective laminated glass has also been provided which includes a near-infrared reflective substrate having a laminate of multiple dielectric films on a polymer resin sheet between a pair of glass plates (for example, see Patent Document 2).

Although the heat ray reflection film in the laminated glass described in Patent Literature 1 has a laminate of alternating PEN and PMMA layers, PEN and PMMA have a large difference in thermal shrinkage rate, which may cause damages, such as delamination between the layers due to heating during production.

The laminated glass described in Patent Literature - 2 includes the dielectric films made of inorganic materials directly formed on the polymer resin sheet made of organic materials, and thus heating during production may cause cracks in the dielectric films because of the difference in thermal shrinkage rate.

When a laminated glass is used for automotive windshields or the like, high light transmission is required to ensure driver's visibility and to keep comfort. The light transmission of laminated glass known in the art decreases with increasing infrared reflectance and the infrared reflectance decreases with increasing light transmission, which imposes another problem of difficulty in achieving both infrared reflectance and light transmission.

Citation List

Patent Literatures

Patent Literature 1: JP 2004-26547 A
Patent Literature 2: JP 2007-148330 A

Summary of Invention

Technical Problem

The present invention has been made in light of the above-mentioned problems, and an object of the present invention is to provide a laminated glass with good infrared reflectance and light transmission while delamination between constitutive layers and cracks in the infrared-reflecting layer due to heating can be prevented in the laminated glass.

Solution to Problem

Studying the causes of the above problems or the like to solve the above problems according to the present invention have found that delamination between constitutive layers and cracks in an infrared-reflecting layer due to heating can be prevented and both infrared reflectance and light transmission can be further achieved when the infrared-reflecting layer provided on a transparent resin film has a laminate of alternating high refractive index layers containing a first water-soluble binder resin and first metal oxide particles and low refractive index layers containing a second water-soluble binder resin and second metal oxide particles and the value obtained by dividing the thermal shrinkage rate of an optical film by the thermal shrinkage rate of the transparent resin film ranges from 1 to 3.

That is, the above problems according to the present invention are solved by the following means.

1. A laminated glass, including: an optical film having at least one infrared-reflecting layer on a transparent resin film; and a pair of glass substrates that sandwich the optical film, wherein the infrared-reflecting layer includes a laminate of alternating high refractive index layers containing a first water-soluble binder resin and first metal oxide particles and low refractive index layers containing a second water-soluble binder resin and second metal oxide particles, and the value obtained by dividing the thermal shrinkage rate of the optical film by the thermal shrinkage rate of the transparent resin film ranges from 1 to 3.

2. The laminated glass according to Item. 1, wherein the infrared-reflecting layers are provided at both sides of the transparent resin film.

3. The laminated glass according to Item. 1 or 2, wherein the total number of the high refractive index layers and the low refractive index layers alternately laminated is from 11 to 31.

4. The laminated glass according to any one of Items. 1 to 3, wherein the first water-soluble binder resin is ethylene-modified polyvinyl alcohol.

Advantageous Effects of Invention

The present invention can provide a laminated glass with good infrared reflectance and light transmission while delamination between constitutive layers and cracks in the infrared-reflecting layer due to heating can be prevented in the laminated glass.

Although the mechanism of expression or action of the advantageous effects of the present invention is unclear, it is supposed as follows.

That is, in the laminated glass according to the present invention, the high refractive index layers and the low refractive index layers that constitute the infrared-reflecting layer each contain a water-soluble binder resin, and the relationship of the thermal shrinkage rate between the optical film and the infrared-reflecting layer is defined as described above. This allows the layers to have a small difference in thermal shrinkage rate to prevent delamination between the layers and cracks in the infrared-reflecting layer due to the difference in the thermal shrinkage rate of the layers.

Laminated glass known in the art having an infrared-reflecting layer free of a water-soluble binder resin and composed of metal oxide particles may have reduced light transmission because the infrared-reflecting layer has an uneven outermost surface to cause scattering of incident light and thus increase haze. The infrared-reflecting layer in the laminated glass according to the present invention, however, contains is water-soluble binder resin to fill the uneven parts of the outermost surface of the infrared-reflecting layer. This smooths the outermost surface of the infrared-reflecting layer in the laminated glass of the present invention to reduce light scattering and thus decrease haze, which suggests that the laminated glass of the present invention has high light transmission.

Laminated glass known in the art free of a water-soluble binder resin and formed by sputtering or other methods contains air having a refractive index of about 1.0 (through which light travels in straight lines) between metal oxide particles; whereas the laminated glass according to the present invention contains a water-soluble binder resin having a refractive index of about 1. 5 between the metal oxide particles constituting the infrared-reflecting layer, which suggests that the laminated glass of the present invention has a high infrared reflectance.

Brief Description of Drawings

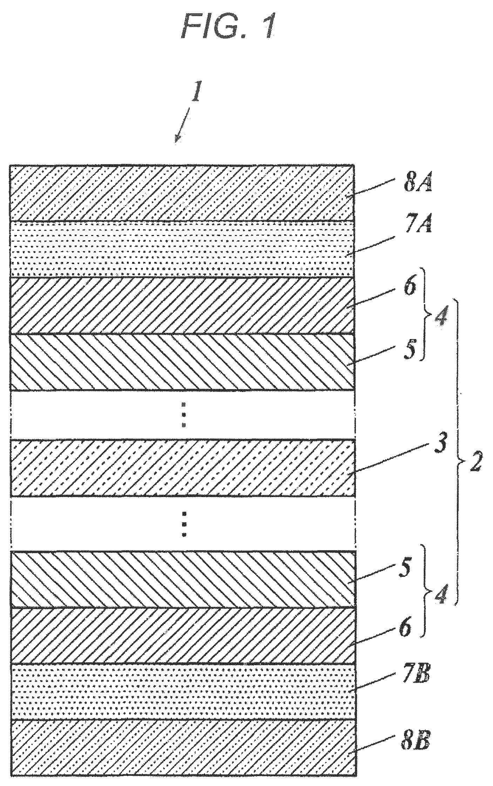

Fig. 1 is a schematic cross-sectional view of an exemplary structure of the laminated glass of the present invention.

Description of Embodiments

The laminated glass of the present invention includes:

an optical film having at least one infrared-reflecting layer on a transparent resin film; and
a pair of glass substrates that sandwich the optical film, wherein
the infrared-reflecting layer has a laminate of alternating high refractive index layers containing a first water-soluble binder resin and first metal oxide particles and low refractive index layers containing a second water-soluble binder resin and second metal oxide particles, and
the value obtained by dividing the thermal shrinkage rate of the optical film by the thermal shrinkage rate of the transparent resin film ranges from 1 to 3. These characteristics are technical features common to the inventions according to claims 1 to 4.

In the present invention, the infrared-reflecting layers are preferably provided at both sides of the transparent resin film. This can prevent the deformation of the optical film during the production of the laminated glass, which enables precise production processes to produce a quality laminated glass.

In the present invention, the total number of the high refractive index layers and the low refractive index layers alternately laminated is preferably 11 to 31. This can prevent delamination between the layers and cracks in the infrared-reflecting layer can be further prevented to improve the infrared reflectance and the light transmission.

In the present invention, the first water-soluble binder resin is preferably ethylene-modified polyvinyl alcohol. This can prevent delamination between the layers and cracks in the infrared-reflecting layer to improve the infrared reflectance and the light transmission.

The present invention and components thereof, and modes and aspects for carrying out the present invention are described below in detail. The word "to" in the following description is used to encompass the values indicated before and after "to" as a lower limit and upper limit.

<<Structure of Laminated Glass>>

First, a principal structure of the laminated glass according to the present invention is described with reference to Fig. 1.

Fig. 1 is a schematic cross-sectional view of an exemplary laminated glass of the present invention.

In Fig. 1, a laminated glass 1 includes an optical film 2 and a pair of glass substrates 8A and 8B that sandwich the optical film 2. Furthermore, the optical film 2 include on a transparent resin film 3 infrared-reflecting layers 4 having a laminate of alternating high refractive index layers 5 containing a first water-soluble binder resin and first metal oxide particles and low refractive index layers 6 containing a second water-soluble binder resin and second metal oxide particles. In addition, adhesive layers 7A and 7B are provided at both sides of the optical film 2 to bond the optical film 2 to the pair of the glass substrates 8A and 8B.

In the illustrated example, the infrared-reflecting layers 4 are provided at both sides of the transparent resin film 3, but the infrared-reflecting layer 4 may be provided at only one side of the transparent resin film 3.

In the laminated glass according to the present invention, the value obtained by dividing the thermal shrinkage rate of the optical film by the thermal shrinkage rate of the transparent resin film ranges from 1 to 3.

In the present invention, the thermal shrinkage rate is measured as below.

A sample (optical film or transparent resin film) is stored under the environment of temperature 23°C and relative humidity (RH) 55% for 24 hours. Two marks are then made at 100 mm intervals in the width direction, and the distance $L_1$ between these two marks is measured under no-load conditions with a microscope or the like. Next, the sample is hung in an oven under a 110°C atmosphere and allowed to stand for 5 minutes. After 5 minutes elapse, the sample is taken out of the oven and stored again under the environment of temperature 23°C and relative humidity (RH) 55% for 24 hours. Next, the distance $L_2$ between two marks in the sample under no-load conditions is measured with a microscope or the like. The thermal shrinkage rate of the sample is calculated from the measured distances $L_1$ and $L_2$ in accordance with the following formula.

$$\texttt{Thermal shrinkage rate (\%)} = ((L_1 - L_2) / L_1) \times 100$$

The above method for measuring the thermal shrinkage rate is illustrative only, and various conditions, such as temperature, humidity, and time, can be appropriately modified.

To control the value obtained by dividing the thermal shrinkage rate of the optical film by the thermal shrinkage rate of the transparent resin film in the range of 1 to 3 in the laminated glass according to the present invention, the materials and thickness of the transparent resin film and the infrared-reflecting layer may be modified, or the total number of the high refractive index layers and the low refractive index layers alternately laminated that constitute the infrared-reflecting layer may be modified. Alternatively, the proportion of components in materials contained in each constitutive layer may be modified.

The above laminated glass may further include an infrared-absorbing layer, a heat-insulating layer, and a hard coat layer as desired.

The glass substrate that constitutes the laminated glass of the present invention may be a flat laminated glass, or may be a curved laminated glass as used for automotive windshields.

The visible light transmittance of the laminated glass of the present invention is preferably 70% or more particularly for use as automotive window glass. The visible light transmittance can be measured, for example, with a spectrophotometer (available from Hitachi, Ltd., U-4000 model) in accordance with JIS R 3106 (1998), "Testing method on transmittance, reflectance and emittance of flat glasses and evaluation of solar heat gain coefficient".

<<Optical Film>>

The optical film used for the laminated glass according to the present invention includes at least one infrared-reflecting layer at least on the transparent resin film, more preferably includes infrared-reflecting layers on both sides of the transparent resin film. The materials, thickness, and the like of the laminated glass according to the present invention are selected such that the value obtained by dividing the thermal shrinkage rate of the optical film by the thermal shrinkage rate of the transparent resin film ranges from 1 to 3.

The optical film according to the present invention includes a transparent resin film and an infrared-reflecting layer(s), and may include other constitutive layers, for example, an infrared-absorbing layer, a heat-insulating layer, and a hard coat layer, as desired.

The total thickness of the optical film according to the present invention is preferably in the range of 30 to 200 $\mu$m, more preferably in the range of 40 to 150 $\mu$m, still more preferably from 40 to 125 $\mu$m.

For the optical properties of the optical film according to the present invention, the visible light transmittance measured in accordance with JIS R 3106 (1998) is preferably 60% or more, more preferably 70% or more, still more preferably 80% or more. In addition, the optical film according to the present invention preferably has a reflectance of more than 50% in the 900 nm to 1400 nm wavelength region.

«Transparent Resin Film»

The transparent resin film used in the laminated glass according to the present invention functions as a support of the optical film. The materials, thickness, and the like of the transparent resin film according to the present invention are selected such that the value obtained by dividing the thermal shrinkage rate of the optical film by the thermal shrinkage rate of the transparent resin film ranges from 1 to 3.

The thickness of the transparent resin film according to the present invention is preferably in the range of 30 to 200 $\mu$m, more preferably in the range of 30 to 150 $\mu$m, most preferably in the range of 35 to 125 $\mu$m. The thickness of 30 $\mu$m or more reduces or prevents occurrence of wrinkles during handling; whereas the thickness of 200 $\mu$m or less improves conformability to glass curved surfaces in the attachment to glass to reduce or prevent occurrence of wrinkles.

The transparent resin film according to the present invention is preferably a biaxially-oriented polypropylene film, but may be an unstretched polyester film or a polyester film stretched in at least one direction, provided that the resulting film is not outside the scope of the present invention. A stretched film is preferred in order to improve the strength and avoid thermal expansion. Particularly for use as automotive windshields, a stretched film is more preferred.

The transparent resin film used in the laminated glass of the present invention can be any transparent resin film without lamination. Examples of transparent resin films that can be used include polyolefin films (e.g., polyethylene, polypropylene), polyester films (e.g., polyethylene terephthalate, polyethylene naphthalate), polyvinyl chloride, cellulose triacetates, polyimide, a polybutyral film, a cycloolefin polymer film, a transparent cellulose nanofiber film, with polyester films being preferred. Polyester films (hereinafter preferred to as polyesters) are preferably, but not necessarily, polyesters having formability into films containing dicarboxylic acid components and diol components as main components. Examples of dicarboxylic acid components as main components include terephthalic acid, isophthalic acid, phthalic acid, 2,6-naphthalene dicarboxylic acid, 2,7-naphthalene dicarboxylic acid, diphenylsulfonedicarboxylic acid, diphenyletherdicarboxylic acid, diphenylethanedicarboxylic acid, cyclohexanedicarboxylic acid, diphenyldicarboxylic acid, diphenylthioetherdicarboxylic acid, diphenylketonedicarboxylic acid, and phenylindandicarboxylic acid. Examples of diol components include ethylene glycol, propylene glycol, tetramethylene glycol, cyclohexanedimethanol, 2,2-bis(4-hydroxyphenyl)propane, 2,2-bis(4-hydroxyethoxyphenyl)propane, bis(4-hydroxyphenyl)sulfone, bisphenol fluorene dihydroxy ethyl ether, diethylene glycol, neopentyl glycol, hydroquinone, and cyclohexanediol. Among polyesters containing these as main components, preferred are polyesters mainly composed of terephthalic acid or 2,6-naphthalene dicarboxylic acid as a dicarboxylic acid component and ethylene glycol or 1,4-cyclohexane dimethanol as a diol component from the viewpoint of transparency, mechanical strength, and dimensional stability. Among these, preferred are polyesters mainly composed of polyethylene terephtalate or polyethylene naphthalate, copolyesters formed from terephthalic acid, 2,6-naphtalene dicarboxylic acid, and ethylene glycol, and polyesters mainly composed of mixtures of two or more of these polyesters.

The transparent resin film according to the present invention may contain particles in order to improve handleability provided that they do not impair transparency. Examples of particles used in the present invention may include inorganic particles, such as calcium carbonate, calcium phosphate, silica, kaolin, talc, titanium dioxide, alumina, barium sulfate, calcium fluoride, lithium fluoride, zeolite, and molybdenum sulfide, and organic particles, such as, crosslinked polymer particles and calcium oxalate. Examples of methods of adding particles include a method for adding particles by incorporating the particles into the above resin material used as a raw material, and a method for adding the particles directly into an extruder. Any one of these methods may be employed or both of them may be used in combination. In addition to the particles, additives may be added as desired in the present invention. Examples of such additives include stabilizers, lubricants, cross-linking agents, antiblocking agents, antioxidants, dyes, pigments, and ultraviolet absorbers.

The transparent resin film can be produced by a general process known in the art. For example, an unstretched transparent resin film that is substantially amorphous and not oriented can be produced by melting a resin used as a material with an extruder and extruding it through a ring die or T-die followed by quenching. A stretched transparent resin film can be produced by stretching an unstretched Transparent resin film in the flow (longitudinal) direction of the transparent resin film, or in the perpendicular (width) direction to the flow direction of the transparent resin film by a known process, such as uniaxial stretching, tenter type sequential biaxial stretching, tenter type simultaneous biaxial stretching, and tubular type simultaneous biaxial stretching. The stretching ratio in this case is appropriately selected according to the resin used as a raw material of the transparent resin film, and preferably 2 to 10 times in the longitudinal direction and the width direction.

The transparent resin film may be subjected to relaxation process and off-line heat treatment from the viewpoint of dimensional stability. The relaxation process is preferably performed in a process in a tenter for width stretching or before rolling up outside a tenter after heat setting in the process of stretched film formation for the polyester film. The temperature of the relaxation process is preferably 80°C to 200°C, more preferably 100°C to 180°C. The relaxation rate in both the longitudinal direction and the width direction is preferably from 0.1% to 10%, more preferably from 2% to 6%. The off-line heat treatment of a relaxed base material improves the thermal resistance and further increases the dimensional stability.

One side or both sides of the transparent resin film are preferably coated in-line with an undercoat layer coating liquid in the process of film formation. An used herein, undercoating in the process of film formation refers to in-line undercoating. Examples of resins used for undercoat layer coating liquids useful in the present invention include polyester resin, acrylic-modified polyester resin, polyurethane resin, acrylic resin, vinyl resin, vinylidene chloride resin, polyethylenimine vinylidene resin, polyethylenimine resin, polyvinyl alcohol resin, modified polyvinyl alcohol resin, and gelatin. Any of them can be preferably used. To these undercoat layers, additives known in the art can also be added. The above undercoat layer can be applied by a known process, such as roll coating, gravure coating, knife coating, dip coating, and spray coating. The amount of the undercoat layer applied is preferably about 0.01 to 2 $g/m^2$ (dry state).

«Infrared-Reflecting Layer»

The infrared-reflecting layer according to the present invention exhibits the function to block the sun rays, particularly an infrared component. The infrared-reflecting layer is a laminate of alternating high refractive index layers containing a first water-soluble binder resin and first metal oxide particles and low refractive index layers containing a second water-soluble binder resin and second metal oxide particles wherein the laminate is formed on the above-described transparent resin film.

The thickness per high refractive index layer is preferably from 20 to 800 nm, more preferably from 50 to 500 nm. The thickness per low refractive index layer is preferably from 20 to 800 nm, more preferably from 50 to 500 nm.

When the thickness per layer is measured here, the high refractive index layer and the low refractive index layer may have a defined interface therebetween, or may have a continuously changing composition. When the composition continuously changes from the interface, the points of the minimum refractive index + $\Delta n$ / 2 between two layers, wherein the maximum refractive index - the minimum refractive index = $\Delta n$, are defined as a layer interface in the region where the layers are mixed so that the refractive index continuously changes. The same applies to the thickness of the low refractive index layer described below.

In the present invention, the metal oxide concentration profile of the infrared-reflecting layer having a laminate of alternating the high refractive index layers and the low refractive index layers can be determined by etching the infrared-reflecting layer from the surface to the depth direction using sputtering, followed by sputtering at a speed of 0.5 nm/min with the outermost surface 0 nm using an XPS surface analyzer to measure the atomic composition ratio. Alternatively, the laminate film is cut and the atomic composition ratio of the cut surface is measured with an XPS surface analyzer to determine the metal oxide concentration profile. When the concentration of metal oxides discontinuously changes in the mixing region, the boundary can be observed by tomograms under an electron microscope (TEM).

The XPS surface analyzer that can be used is not limited to particular models, and examples include ESCALAB-200R available from VG Scientific. The atomic composition ratio is determined using Mg for an X-ray anode at an output of 600 W (accelerating voltage 15 kV, emission current 40 mA).

For the infrared-reflecting layer according to the present invention, the total number of the high refractive index layers and the low refractive index layers is preferably in the range of 6 to 50, more preferably in the range of 8 to 40, still more preferably in the range of 9 to 30 from the viewpoint of productivity. The total number of the high refractive index layers and the low refractive index layers is preferably from 11 to 31 from the viewpoint of infrared reflectance, light transmission, and prevention of delamination or cracks due to heating.

In the infrared-reflecting layer, the high refractive index layers and the low refractive index layers are preferably designed to have a large difference in refractive index in order to increase the reflectance of infrared rays being heat rays with a smaller number of the layers. In the present invention, the difference in refractive index of the high refractive index layer and the low refractive index layer adjoining each other is preferably 0.1 or more, more preferably 0.3 or more, still more preferably 0.35 or more, particularly preferably 0.4 or more. The outermost layer or the bottom layer may have a structure out of the above suitable ranges.

The reflectance in a specific wavelength region is determined according to the difference in refractive index between adjoining two layers and the number of layers laminated. A larger difference in refractive index provides the same reflectance with a smaller number of layers. This difference in refractive index and the number of layers required can be calculated using commercially-available optical design software. For example, to achieve a near-infrared reflectance of 90% or more, 200 or more layers need to be laminated with a difference in refractive index of less than 0.1, which not only reduces productivity but also increases scattering at lamination interfaces to decrease transparency, and which also hinders production without any troubles. There is no upper limitation on the difference in refractive index in order to improve the reflectance and reduce the number of layers, but the limit of the difference in refractive index is substantially about 1.4.

The infrared-reflecting layer according to the present invention preferably has a layered structure where the bottom layer adjoining to the transparent resin film is a low refractive index layer from the viewpoint of the adhesion to the transparent resin film.

In the present invention, the first and second water-soluble binder resins in the high refractive index layer or the low refractive index layer is preferably polyvinyl alcohol. The degree of saponification of polyvinyl alcohol present in the high refractive index layer is preferably different from that of polyvinyl alcohol present in the low refractive index layer. The first metal oxide particles present in the high refractive index layer are preferably titanium oxide particles of which surface is treated with a silicon-containing hydrated oxide.

(1) High Refractive Index Layer

The high refractive index layer according to the present invention contains the first water-soluble binder resin and the first metal oxide particles, and may further contain a curing agent, other binder resins, a surfactant, various additives, and the like as desired.

The refractive index of the high refractive index layer according to the present invention is preferably from 1.80 to 2.50, more preferably from 1.90 to 2.20.

(1-1) First Water-Soluble Binder Resin

As used herein, the first water-soluble binder resin refers to such a water-soluble binder resin that, when it is dissolved in water at a concentration of 0.5 mass% at a temperature at which the first water-soluble binder resin is most dissolved, the mass of insoluble materials separated by filtering through a G2 glass filter (maximum pore 40 to 50 $\mu$m) is 50 mass% or less of the water-soluble binder resin added.

The weight-average molecular weight of the first water-soluble binder resin according to the present invention is preferably in the range of 1,000 to 200,000. It is still more preferably in the range of 3,000 to 40,000.

The weight-average molecular weight as used herein can be measured by a known method, for example, static light scattering, gel permeation chromatography (GPC), time of flight mass spectrometry (TOF-MASS), or the like. In the present invention, it is measured by gel permeation chromatography being a commonly known method.

The content of the first water-soluble binder resin in the high refractive index layer is preferably in the range of 5 to 50 mass%, more preferably in the range of 10 to 40 mass% with respect to 100 mass% of the solid content of the high refractive index layer.

The first water-soluble binder resin that is added to the high refractive index layer is preferably polyvinyl alcohol. The second water-soluble binder resin present in the low refractive index layer described below is also preferably polyvinyl alcohol. Thus, polyvinyl alcohol contained in the high refractive index layer and the low refractive index layer is described below.

(1-1-1) Polyvinyl Alcohol

In the present invention, the high refractive index layer and the low refractive index layer preferably contain two or more types of polyvinyl alcohols having a different degree of saponification. To distinguish these polyvinyl alcohols, polyvinyl alcohol as the first water-soluble binder resin used in the high refractive index layer is referred to as polyvinyl alcohol (A), whereas the polyvinyl alcohol as the second water-soluble binder resin used in the low refractive index layer is referred to as polyvinyl alcohol (B). When the refractive index layers each contain multiple polyvinyl alcohols having different degrees of saponification and polymerization, polyvinyl alcohols present at the highest level in the respective refractive index layers are referred to as polyvinyl alcohol (A) in the high refractive index layer and polyvinyl alcohol (B) in the low refractive index layer.

The "degree of saponification" as used herein refers to the rate of hydroxy groups to the total number of acetyloxy groups (derived from vinyl acetate as a raw material) and hydroxy groups in polyvinyl alcohol.

In terms of the "polyvinyl alcohol present at the highest level in the refractive index layer" as used herein, the degree of polymerization is calculated given that polyvinyl alcohols having a 3 mol% or less difference in degree of saponification are taken as the same polyvinyl alcohol. It is noted that low-polymerization-degree polyvinyl alcohols having degrees of polymerization of 1,000 or less are taken as different polyvinyl alcohols (polyvinyl alcohols having a 3 mol% or less difference in degree of saponification, if present, are not taken as the same polyvinyl alcohol). Specifically, when polyvinyl alcohols having degrees of saponification of 90, 91, and 93 mol% are present at 10, 40, and 50 mass% respectively in the same layer, these three polyvinyl alcohols are taken as the same polyvinyl alcohol, and a mixture of these three polyvinyl alcohols is referred to as polyvinyl alcohol (A) or (B). The "polyvinyl alcohols having a 3 mol% or less difference in degree of saponification" means that the difference in degree of saponification is 3 mol% or less based on any one of the polyvinyl alcohols. For example, when polyvinyl alcohols having degrees of saponification of, for example, 90, 91, 92, and 94 mol% are present, the difference in degree of saponification between these polyvinyl alcohols is 3 mol% or less based on a polyvinyl alcohol having a degree of saponification of 91 mol%, and these polyvinyl alcohols are thus taken as the same polyvinyl alcohol.

When polyvinyl alcohols having a 3 mol% or more difference in degree of saponification are present in the same layer, they are taken as a mixture of different polyvinyl alcohols, and the degree of polymerization and the degree pf saponification are calculated for each polyvinyl alcohol. For example, when 5 mass% of PVA 203, 25 mass% of PVA 117, 10 mass% of PVA 217, 10 mass% of PVA 220, 10 mass% of PVA 224, 20 mass% of PVA 235, and 20 mass% of PVA 245 are present, PVA (polyvinyl alcohol) present at the highest level is a mixture of PVAs 217 to 245 (taken as the same polyvinyl alcohol since the difference in degree of saponification of PVAs 217 to 245 is 3 mol% or less. This mixture is referred to as polyvinyl alcohol (A) or (B). The degree of polymerization of the mixture of PVAs 217 to 245 (polyvinyl alcohol (A) or (B)) is (1700 × 0.1 + 2000 × 0.1 + 2400 × 0.1 + 3500 × 0.2 + 4500 × 0.7) / 0.7 = 3200, and the degree of saponification is 88 mol%.

The difference in the absolute value of the degree of saponification between the polyvinyl alcohol (A) and the polyvinyl alcohol (B) is preferably 3 mol% or more, more preferably 5 mol% or more. The difference in such a range is preferred since the interlayer mixed state between the high refractive index layer and the low refractive index layer is brought to a suitable level. The difference in degree of saponification between the polyvinyl alcohol (A) and the polyvinyl alcohol (B) is preferably larger, but preferably 20 mol% or less from the viewpoint of the solubility of polyvinyl alcohol in water.

The degree of saponification of the polyvinyl alcohol (A) and the polyvinyl alcohol (B) is preferably 75 mol% or more from the viewpoint of the solubility in water. It is more preferred that the degree of saponification of one of the polyvinyl alcohol (A) and the polyvinyl alcohol (B) be 90 mol% or more, and that of the other be 90 mol% or less in order to bring the interlayer mixed state between the high refractive index layer and the low refractive index layer to a suitable level. It is still more preferred that the degree of saponification of one of the polyvinyl alcohol (A) and the polyvinyl alcohol (B) be 95 mol% or more, and that of the other be 90 mol% or less. The upper limit of the degree of saponification of polyvinyl alcohol is typically, but not necessarily, less than 100 mol%, or about 99.9 mol% or less.

In addition, the degree of polymerization of two types of polyvinyl alcohols having different degrees of saponification that can be used is preferably 1,000 or more, in particular, more preferably in the range of 1, 500 to 5,000, s till more preferably in the range of 2, 000 to 5,000. The degree of polymerization of polyvinyl alcohol of 1,000 or more avoids cracks in a coating film, whereas the degree of polymerization of 5,000 or less stabilizes a coating liquid. The phrase "stabilize a coating liquid" as used herein means that the coating liquid is stabilized over time. The degree of polymerization of at least one of the polyvinyl alcohol (A) and the polyvinyl alcohol (B) in the range of 2,000 to 5,000 is preferred because it results in reduced cracks in a coating film to improve the reflectance at a specific wavelength. The degree of polymerization of both the polyvinyl alcohol (A) and the polyvinyl alcohol (B) in the range of 2, 000 to 5, 000 is preferred because the above advantageous effects can be more notably exhibited.

The "degree of polymerization" as used herein refers to a viscosity average degree of polymerization. The degree of polymerization is measured in accordance with JIS K 6726 (1994) and determined in accordance with the following equation (1) from a limiting viscosity [η] (dl/g) of PVA measured in water at 30°C after PVA is completely resaponified and purified,

Equation (1)

$$P = ([\eta] \times 10^3 / 8.29)^{(1 / 0.62)}$$

The polyvinyl alcohol (B) present in the low refractive index layer preferably has a degree of saponification in the range of 75 to 90 mol% and a degree of polymerization in the range of 2,000 to 5,000. The presence of polyvinyl alcohol having such properties in the low refractive index layer is preferred in order to reduce or prevent interface mixing. This is because it reduces cracks in a coating film and also improves setting properties.

The polyvinyl alcohols (A) and (B) used in the present invention may be synthetic products or may be commercial products. Examples of commercial products used as the polyvinyl alcohols (A) and (B) include PVA-102, PVA-103, PVA-105, PVA-110, PVA-117, PVA-120, PVA-124, PVA-203, PVA-205, PVA-210, PVA-217, PVA-220, PVA-224, and PVA-235 (available from Kuraray Co. , Ltd.), and JC-25, JC-33, JF-03, JF-04, JF-05, JP-03, JP-04JP-05, and JP-45 (available from Japan Vam & Poval Co., Ltd.).

The water-soluble binder resin according to the present invention may also contain partially modified polyvinyl alcohol, in addition to ordinary polyvinyl alcohol obtained by hydrolysis of polyvinyl acetate, provided that it does not impair the advantageous effects of the present invention. The presence of such modified polyvinyl alcohol may improve the adherence, water resistance, and flexibility of a film. Examples of such modified polyvinyl alcohols include cationic modified polyvinyl alcohols, anionic modified polyvinyl alcohols, nonionic modified polyvinyl alcohols, and vinyl alcohol-based polymers.

Examples of cationic modified polyvinyl alcohols include polyvinyl alcohols having primary to tertiary amino groups or a quaternary ammonium group in the main chain or side chain of the polyvinyl alcohols, as described in JP 61-10483 A, which polyvinyl alcohols are obtained by saponifying a copolymer of vinyl acetate and an ethylenically unsaturated monomer having a cationic group.

Examples of ethylenically unsaturated monomer having a cationic group include trimethyl-(2-acrylamide-2,2-dimethylethyl)ammonium chloride, trimethyl-(3-acrylamide-3,3-dimethylpropyl)ammonium chloride, N-vinylimidazole, N-vinyl-2-methylimidazole, N-(3-dimethylaminopropyl)methacrylamide, hydroxylethyl trimethylammonium chloride, trimethyl-(2-methacrylamidepropyl)ammonium chloride, and N-(1,1-dimethyl-3-dimethylaminopropyl)acrylamide. The ratio of the cationic modified group-containing monomer in a cationic modified polyvinyl alcohol is 0.1 to 10 mol%, preferably 0.2 to 5 mol% with respect to vinyl acetate.

Examples of anionic modified polyvinyl alcohols include polyvinyl alcohols having an anionic group as described in JP 1-206088 A, copolymers of vinyl alcohol and a vinyl compound having a water-soluble group as described in JP 61-237681 A and JP 63-307979 A, and modified polyvinyl alcohols having a water-soluble group as described in JP 7-285265 A.

Examples of nonionic modified polyvinyl alcohols include polyvinyl alcohol derivatives obtained by adding a polyalkylene oxide group to is part of vinyl alcohol as described in JP 7-9758 A, block copolymers of vinyl alcohol and a vinyl compound having a hydrophobic group as described in JP 8-25795 A, silanol-modified polyvinyl alcohols having a silanol group, and reactive group-modified polyvinyl alcohols having reactive groups such as an acetoacetyl group, a carbonyl group, or a carboxyl group.

Examples of vinyl alcohol-based polymers include EXCEVAL (registered trademark, available from Kuraray Co., Ltd.) and Nichigo G-Polymer (registered trademark, available from The Nippon Synthetic Chemical Industry Co., Ltd.).

Two or more types of polyvinyl alcohols having different degrees of polymerization or different modifications can be used in combination.

The content of modified polyvinyl alcohol(s) is preferably, but not necessarily, 1 to 30 mass% with respect to the total mass (solid content) at each refractive index. The content of modified polyvinyl alcohol(s) in such a range provides the above advantageous effects.

In the present invention, two types of polyvinyl alcohols having a different degree of saponification are preferably used in the layers having a different refractive index, respectively.

For example, when the polyvinyl alcohol (A) having a lower degree of saponification is used in the high refractive index layer and the polyvinyl alcohol (B) having a higher degree of saponification is used in the low refractive index layer, the polyvinyl alcohol (A) in the high refractive index layer is preferably present in the range of 40 mass% to 100 mass%, more preferably from 60 mass% to 95 mass% with respect to the total mass of polyvinyl alcohols in the layer, and the polyvinyl alcohol (B) in the low refractive index layer is preferably present in the range of 40 mass% to 100 mass%, more preferably from 60 mass% to 95 mass% with respect to the total mass of polyvinyl alcohols in the low refractive index layer. When the polyvinyl alcohol (A) having a higher degree of saponification is used in the high refractive index layer and the polyvinyl alcohol (B) having a lower degree of saponification is used in the low refractive index layer, the polyvinyl alcohol (A) in the high refractive index layer is preferably present in the range of 40 mass% to 100 mass%, more preferably from 60 mass% to 95 mass% with respect to the total mass of polyvinyl alcohols in the layer, and the polyvinyl alcohol (B) in the low refractive index layer is preferably present in the range of 40 mass% to 100 mass%, more preferably from 60 mass% to 95 mass with respect to the total mass of polyvinyl alcohols in the low refractive index layer. The polyvinyl alcohol in an amount of 40 mass% or more provides significant advantageous effects of reduced interlayer mixing and less interface disorder. The polyvinyl alcohol in an amount of 100 mass% or less improves the stability of a coating liquid.

(1-1-2) Other Binder Resins

In the high refractive index layer according to the present invention, any water-soluble binder resin that allows the high refractive index layer containing the first metal oxide particles to form a coating film can be used as a first water-soluble binder resin other than polyvinyl alcohol without limitation. In the low refractive index layer described below, any water-soluble binder resin that allows the low refractive index layer similarly containing the second metal oxide particles to form a coating film can be used similarly as a second water-soluble binder resin other than polyvinyl alcohol without limitation. It is noted that water-soluble polymers (particularly, gelatin, polysaccharide thickeners, polymers having reactive functional groups) are preferred from the viewpoint of environmental issues and the flexibility of coating films. These water-soluble polymers may be used singly or may be used as a mixture of two or more.

In the high refractive index layer, the content of - other binder resins used in combination with polyvinyl alcohol preferably used as the first water-soluble binder resin may be in the range of 5 to 50 mass% with respect to 100 mass% of the solid content of the high refractive index layer.

No organic solvent is required in the present invention, and thus the binder resin is preferably formed from water-soluble polymers for environmental preservation. That is, in addition to the above polyvinyl alcohols and modified polyvinyl alcohols, water-soluble polymers other than polyvinyl alcohols and modified polyvinyl alcohols may be used as a binder resin in the present invention, provided that they do not impair the advantageous effects of the present invention. The water-soluble polymer refers to such a water-soluble polymer that, when it is dissolved in water at a concentration of 0.5 mass% at a temperature at which the water-soluble polymer is most dissolved, the mass of insoluble materials separated by filtering through a G2 glass filter (maximum pore 40 to 50 μm) is 50 mass% or less of the water-soluble polymer added. Among such water-soluble polymers, gelatin, celluloses, polysaccharide thickeners, polymers having reactive functional groups are particularly preferred. These water-soluble polymers may be used singly or may be used as a mixture of two or more.

These water-soluble polymers will be described below.

(Gelatin)

Gelatins applicable to the present invention are various gelatins that have been widely used in the field of silver halide photosensitive materials, and examples include acid-treated gelatins, alkali-treated gelatins, enzymatically-treated gelatins obtained by enzymatic treatment of gelatins during gelatin production, and gelatin derivatives, i.e., gelatins modified by treatment with reagents having an amino group, imino group, hydroxyl group, and carboxyl group as a functional group in their molecules, i.e., having a group reactive with the gelatins. General methods for producing gelatins are well known and reference is made to, for example, the descriptions in T. H. James: The Theory of Photographic Process 4th. ed. 1977 (Macmillan), page 55; Scientific Photography Manual (Vol. 1), pp. 72-75, (Maruzen) ; Fundamentals of Photographic Engineering - Silver Halide Photography, pp. 119-124 (Corona Publishing). Gelatins include those described in Research Disclosure, vol. 176, No. 17643 (December, 1978), section IX.

(Gelatin Hardening Agent)

When gelatin is used, a gelatin hardening agent can also be added as desired.

Known compounds used as a hardening agent for an ordinary photographic emulsion layer can be used as a hardening agent. Examples of hardening agents include organic hardening agents, such as vinyl sulfone compounds, urea-formalin condensates, melanin-formalin condensates, epoxy compounds, aziridine compounds, active olefins, and isocyanate compounds; inorganic polyvalent metal salts of chromium, aluminum, zirconium, and the like.

(Celluloses)

Celluloses that can be used in the present invention are preferably water-soluble cellulose derivatives. Examples of celluloses include water-soluble cellulose derivatives, such as carboxymethyl cellulose (cellulose carboxymethyl ether), methyl cellulose, hydroxymethyl cellulose, hydroxyethyl cellulose, hydroxypropyl cellulose; carboxylic acid group-containing celluloses, such as carboxymethyl cellulose (cellulose carboxymethyl ether) and carboxyethyl cellulose. Other celluloses include cellulose derivatives, such as nitrocellulose, cellulose acetate propionate, cellulose acetate, and cellulose sulfate.

(Polysaccharide Thickeners)

Examples of polysaccharide thickeners that can be used in the present invention include, but are not limited to, commonly-known natural simple polysaccharides, natural heteropolysaccharides, synthetic simple polysaccharides, and synthetic heteropolysaccharides. For the details about these polysaccharides, reference can be made to, for example, "Biochemistry Dictionary (2nd edition), Tokyo Kagaku Dojin Publishing" and "Food Industry," volume 31 (1988), page 21.

The polysaccharide thickener as used herein refers to a saccharide polymer, which has many hydrogen-bonding groups in its molecule and has properties of a large difference in viscosity between at a low temperature and at a high temperature because of the difference in intermolecular hydrogen bonding strength depending on temperature. Furthermore, when metal oxide particles are added to the polysaccharide thickener, the viscosity of the polysaccharide thickener increases at low temperature, which may be caused by the hydrogen bonding to the metal oxide microparticles. The viscosity increase at 15°C is 1.0 mPa·s or more, preferably 5.0 mPa·s or more, more preferably 10.0 mPa·s or more.

Examples of polysaccharide thickeners applicable to the present invention include galactans (e.g., agarose, agaropectin), galactomannoglycans (e.g., locust bean gum, guaran), xyloglucans (e.g., tamarind gum), glucomannoglycans (e.g., konjakmannan, wood-derived glucomannan, xanthane gum), galactoglucomannoglycans (e.g., softwood-derived glycan), arabinogalactoglycans (e.g., soybean-derived glycan, microorganism-derived glycan), glucorhamnoglycans (e.g., gellan gum), glycosaminoglycans (e.g., hyaluronic acid, keratan sulfate), red algae-derived natural polymer polysaccharides, such as alginic acid and alginate, agar, $\kappa$-carrageenan, $\lambda$-carrageenan, $\tau$-carrageenan, and furcellaran. To avoid decrease in dispersion stability of the metal oxide microparticles present in coating liquids, the polysaccharide thickener preferably has a structural unit having no carboxylate or sulfonate group. Preferred examples of such polysaccharides include polysaccharides consisting of pentoses, such as L-arabitose, D-ribose, 2-deoxyribose, and D-xylose, and of hexoses, such as D-glucose, D-fructose, D-mannose, or D-galactose. Specific examples of suitable polysaccharides that can be preferably used include tamarind seed gum, known as xyloglucan, having glucose in the main chain and glucose in the side chains, guar gum, known as galactomannan, having mannose in the main chain and glucose in the side chains, cationized guar gum, hydroxypropyl guar gum, locust bean gum, tara gum, arabinogalactan having galactose in the main chain and arabinose in the side chains. In particular, tamarind, guar gum, cationized guar gum, and hydroxypropyl guar gum are preferred in the present invention.

In the present invention, two or more polysaccharide thickeners can be also used in combination.

(Polymers Having Reactive Functional Group)

Water-soluble polymers applicable to the present invention are polymers having a reactive functional group, and examples include polyvinylpyrrolidones; acrylic resins, such as polyacrylic acid, acrylic acid-acrylnitrile copolymer, potassium acrylate-acrylnitrile copolymer, vinyl acetate-acrylic acid ester copolymer, and acrylic acid-acrylic acid ester copolymer; styrene acrylic acid resins, such as styrene-acrylic acid copolymer, styrene-methacrylic acid copolymer, styrene-methacrylic acid-acrylic acid ester copolymer, styrene-$\alpha$-methylstyrene-acrylic acid copolymer, and styrene-$\alpha$-methylstyrene-acrylic acid-acrylic acid ester copolymer; vinyl acetate-based copolymers, such as styrene-sodium styrenesulfonate copolymer, styrene-2-hydroxyethyl acrylate copolymer, styrene-2-hydroxyethyl acrylate-potassium styrenesulfonate copolymer, styrene-maleic acid copolymer, styrene-maleic acid anhydride copolymer, vinylnaphthalene-acrylic acid copolymer, vinylnaphthalene-maleic acid copolymer, vinyl acetate-maleic acid ester copolymer, vinyl acetate-crotonic acid copolymer, vinyl acetate-acrylic acid copolymer; and salts thereof. Of these, particularly preferred examples include polyvinylpyrrolidones and copolymers containing polyvinylpyrrolidones.

(1-2) First Metal Oxide Particles

First metal oxide particles that can be added to the high refractive index layer according to the present invention are preferably metal oxide particles having a refractive index of 2.0 or more and 3.0 or less. Specific examples include titanium oxide, zirconium oxide, zinc oxide, synthetic amorphous silica, colloidal silica, alumina, colloidal alumina, lead titanate, minium, chrome yellow, zinc yellow, chrome oxide, ferric oxide, iron black, copper oxide, magnesium oxide, magnesium hydroxide, strontium titanate, yttrium oxide, niobium oxide, europium oxide, lanthanum oxide, zircon, and tin oxide. Complex oxide particles composed of multiple metals, and core-shell particles having different metal compositions in the core and shell can be also used.

To form a high refractive index layer that is transparent and having a higher refractive index, the high refractive index layer according to the present invention preferably contains oxide microparticles of metals having high refractive index, such as titanium and zirconium, i.e., titanium oxide microparticles and/or zirconia oxide microparticles. Of these, titanium oxide is more preferred from the viewpoint of the stability of a coating liquid for forming the high refractive index layer. In addition, the rutile type (tetragonal system) of titanium oxide is more preferred than the anatase type because the rutile type can increase the weather resistance of the high refractive index layer or adjoining layers due to its low catalytic activity, and further increase the refractive index.

When core-shell particles are used as first metal oxide particles in the high refractive index layer according to the present invention, core-shell particles in which titanium oxide particles are coated with a silicon-containing hydrated oxide are more preferred because the interaction between the silicon-containing hydrated oxide in the shell layer and the first water-soluble binder resin advantageously reduces interlayer mixing between the high refractive index layer and adjoining layers.

An aqueous solution containing titanium oxide particles used for the core of the core-shell particles according to the present invention preferably has a pH of 1.0 to 3.0, and the surface of an aqueous titanium oxide sol containing titanium particles with positive zeta potential is preferably hydrophobized into dispersible particles in organic solvents for use.

The content of the first metal oxide particles according to the present invention is preferably 15 to 80 mass% with respect to 100 mass% of the solid content of the high refractive index layer in order to generate a difference in refractive index from that of the low refractive index layer. Furthermore, the content is more preferably 20 to 77 mass%, still more preferably 30 to 75 mass%. The content of metal oxide particles other than the core-shell particles, if present in the high refractive index layer according to the present invention, is not limited to particular values, provided that the advantageous effects of the present invention can be exerted.

In the present invention, the volume average particle size of the first metal oxide particles that are added to the high refractive index layer is preferably 30 nm or less, more preferably 1 to 30 nm, still more preferably 5 to 15 nm. The volume average particle size of 1 nm or more and 30 nm or less is preferred from the viewpoint of reduced haze and improved visible light transmittance.

The volume average particles size of the first metal oxide particles according to the present invention refers to the average particle size obtained by the following: measuring the size of 1,000 arbitrary particles by laser diffraction scattering, dynamic light scattering, electron microscopic observation, or observation of images of particles appearing on the cross section or surface of the refractive index layer under an electron microscope; and calculating the average particle size which is weighted by a volume and represented by the equation, volume average particle size $mv = \{\sum(vi \cdot di)\} / \{\sum(vi)\}$, wherein vi is a volume per particle in the population of n1, n2...ni...and nk metal oxide particles having particle sizes of d1, d2...di...dk, respectively.

(1-3) Curing Agent

In the present invention, a curing agent can be also used to cure the first water-soluble binder resin that is added to the high refractive index layer. A curing agent that can be used in combination with the first water-soluble binder resin can be any curing agent that causes curing reactions with the first water-soluble binder resin. For example, when polyvinyl alcohol is used as the first water-soluble binder resin, boric acid and salts thereof are preferred as a curing agent. In addition to boric acid and salts thereof, known compounds can be used. In general, compounds that have groups reactive with polyvinyl alcohol or compounds that promote the reactions between different groups of polyvinyl alcohol are appropriately selected and used. Specific examples of curing agents include epoxy curing agents (e.g., diglycidyl ethyl ether, ethylene glycol diglycidyl ether, 1,4-butanediol diglycidyl ether, 1,6-diglycidyl cyclohexane, N,N-diglycidyl-4-glycidyloxyaniline, sorbitol polyglycidyl ether, glycerol polyglycidyl ether), aldehyde curing agents (e.g., formaldehyde, glyoxal), active halogen curing agents (e.g., 2,4-dichloro-4-hydroxy-1,3,5-s-triazine), active vinyl-based compounds (e.g., 1,3,5-trisacryloyl-hexahydro-s-triazine, bis-vinyl sulfonyl methyl ether), and aluminium alum.

Boric acid and salts thereof refer to oxygen acid and salts thereof that have a boron atom as a central atom, and specific examples include orthoboric acid, diboric acid, metaboric acid, tetraboric acid, pentaboric acid, octaboric acid, and salts thereof.

(2) Low Refractive Index Layer

The low refractive index layer according to the present invention contains the second water-soluble binder resin and the second metal oxide particles, and may further contain a curing agent, surface coating component, particle surface protecting agent, binder resin, surfactant, various additives, and the like.

The refractive index of the low refractive index layer according to the present invention is preferably from 1.10 to 1.60, more preferably from 1.30 to 1.50.

(2-1) Second Water-Soluble Binder Resin

The second water-soluble binder resin that is added to the low refractive index layer according to the present invention is preferably polyvinyl alcohol. In addition, the polyvinyl alcohol (B) having a different degree of saponification from that of the polyvinyl alcohol (A) present in the high refractive index layer is preferably used in the low refractive index layer according to the present invention. The description about polyvinyl alcohol and the polyvinyl alcohol (B), including the preferred weight-average molecular weight of the second water-soluble binder resin here, is provided in the first water-soluble binder resin of the above high refractive index layer, and thus omitted here.

The content of the second water-soluble binder resin in the low refractive index layer is from 20 to 99.9 mass%, more preferably from 25 to 80 mass% with respect to 100 mass% of the solid content of the low refractive index layer.

(Other Binder Resins)

As a second water-soluble binder resin other than polyvinyl alcohol, which can be added to the low refractive index layer according to the present invention, any water-soluble binder resin that allows the low refractive index layer containing metal oxide particles to form a coating film can be used without limitation. It is noted that water-soluble polymers (particularly, gelatin, polysaccharide thickeners, polymers having reactive functional groups) are preferred from the viewpoint of environmental issues and the flexibility of coating films. These water-soluble polymers may be used singly or may be used as a mixture of two or more.

In the low refractive index layer, the content of other binder resins used in combination with polyvinyl alcohol preferably used as the second water-soluble binder resin may be from 0 to 10 mass% with respect to 100 mass% of the solid content of the low refractive index layer.

The low refractive index layer in the optical film according to the present invention may contain water-soluble polymers, such as celluloses, polysaccharide thickeners, and polymers having a reactive functional group. These water-soluble polymers, such as celluloses, polysaccharide thickeners, and polymers having a reactive functional group are the same water-soluble polymers as described in the above high refractive index layer, and thus the description about them is omitted here.

(2-2) Second Metal Oxide Particles

The second metal oxide particles that are added to the low refractive index layer according to the present invention is preferably silica (silicon dioxide), and specific examples include synthetic amorphous silica and colloidal silica. Of these, acidic colloidal silica sol is more preferably used, and colloidal silica sol dispersed in organic solvents is still more preferably used. To further reduce the refractive index, hollow microparticles having a void inside can be used as the second metal oxide particles that are added to the low refractive index layer, and hollow microparticles of silica (silicon dioxide) are particularly preferred.

The second metal oxide particles (preferably, silicon dioxide) that are added to the low refractive index layer preferably have an average particle size of 3 to 100 nm. The average particle size of primary particles of silicon dioxide dispersed in the state of primary particles (particle size in the state of a dispersion liquid before application) is more preferably from 3 to 50 nm, still more preferably from 3 to 40 nm, particularly preferably from 3 to 20 nm, most preferably from 4 to 10 nm. The average particle size of secondary particles is preferably 30 nm or less from the viewpoint of reduced haze and improved visible light transmittance.

The average particle size of the second metal oxide particles that are added to the low refractive index layer is determined by measuring the size of 1,000 arbitrary particles through electron microscopic observation of particles themselves or particles appearing on the cross section or surface of the refractive index layer and calculating the average particle size as a simple average value (number average). The particle size of each particle is expressed by the diameter of a circle equal to the projected area of the particle.

Colloidal silica used in the present invention is obtained by heat aging a silica sol obtained by double decomposition of sodium silicate with an acid or the like or by passing sodium silicate through an ion exchange resin layer. Examples of colloidal silica include those described in JP 57-14091 A, JP 60-219083 A, JP 60-219084 A, JP 61-20792 A, JP 61-188183 A, JP 63-17807 A, JP 4-93284 A, JP 5-278324 A, JP 6-92011 A, JP 6-183134 A, JP 6-297830 A, JP 7-81214 A, JP 17-101142 A, JP 7-179029 A, JP 7-137431 A, and WO 94/26530.

Such colloidal silica may be a synthetic product or may be a commercial product. The surface of colloidal silica may be cationically modified or treated with Al, Ca, Mg, Ba, or the like.

Hollow particles can also be used as the second metal oxide particles that are added to the low refractive index layer. When hollow particles are used, the average particle void size is preferably from 3 to 70 nm, more preferably from 5 to 50 nm, still more preferably from 5 to 45 nm. The average particle void size of hollow particles refers to the mean of the inner diameters of hollow particles. In the present invention, the average particle void size of hollow particles in the above range sufficiently reduces the refractive index of the low refractive index layer. The average particle void size is obtained by randomly observing 50 or more particles whose voids are observed as circle, ellipse, or substantial circle or ellipse to determine the void size of each particle through electron microscopic observation, and calculating the number average value. The average particle void size means to the minimum distance between two parallel lines that sandwich the circumference of a void that can be observed as circle, ellipse, or substantial circle or ellipse.

The surface of the second metal oxide particles that are added to the low refractive index layer may be coated with a surface coating component.

The content of the second metal oxide particles in the low refractive index layer is preferably from 0.1 to 70 mass%, more preferably from 30 to 70 mass%, still more preferably from 45 to 65 mass% with respect to 100 mass% of the solid content of the low refractive index layer.

(2-3) Curing Agent

The low refractive index layer according to the present invention may further contain a curing agent in the same manner as in the high refractive index layer. Any curing agent that causes curing reactions with the second water-soluble binder resin present in the low refractive index layer can be used without limitation. In particular, a curing agent when polyvinyl alcohol is used as the second water-soluble binder resin that is added to the low refractive index layer is preferably boric acid and salts thereof and/or borax. In addition to boric acid and salts thereof, known compounds can be used.

The content of the curing agent in the low refractive index layer is preferably from 1 to 10 mass%, more preferably from 2 to 6 mass% with respect to 100 mass% of the solid content of the low refractive index layer.

In particular, the total amount of the curing agent used when polyvinyl alcohol is used as the second water-soluble binder resin is preferably from 1 to 600 mg per gram of polyvinyl alcohol, more preferably from 100 to 600 mg per gram of polyvinyl alcohol.

Specific examples of curing agents and the like are the same as those in the above high refractive index layer, and the description about them are omitted here.

(3) Additives in Each Refractive Index Layer

The high refractive index layer and the low refractive index layer according to the present invention may contain various additives as desired. The content of additives, in the high refractive index layer is preferably from 0 to 20 mass% with respect to 100 mass% of the solid content of the high refractive index layer. Examples of the additives are described below.

(3-1) Surfactant

In the present invention, at least one of the high refractive index layers and the low refractive index layers may further contain a surfactant. Any type of zwitterionic, cationic, anionic, or nonionic surfactant can be used. More preferred are betaine-based zwitterionic surfactants, quaternary ammonium salt-based cationic surfactants, dialkyl sulfosuccinate-based anionic surfactants, acetylene glycol-based nonionic surfactants, or fluorine-containing cationic surfactants.

The amount of the surfactant according to the present invention added is preferably in the range of 0.005 to 0.30 mass%, more preferably from 0.01 to 0.10 mass%, given that the total mass of a coating liquid for the high refractive index layer or a coating liquid for the low refractive index layer is 100 mass%.

(3-2) Amino Acid

The high refractive index layer or the low refractive index layer according to the present invention may contain amino acids having an isoelectric point of 6.5 or less. The presence of such amino acids may improve the dispersibility of the first or second metal oxide particles in the high refractive index layer or the low refractive index layer.

The amino acid as used herein refers to a compound having an amino group and a carboxyl group in the same molecule, and may be any type of amino acid, including $\alpha$-, $\beta$-, $\gamma$-amino acids. Although some amino acids have optical isomers, there is no difference in effect depending on optical isomers in the present invention, and all isomers can be used singly or as a racemate.

For detailed description about amino acids, reference can be made to the description in Encyclopedia of Chemistry, vol. 1, compact edition, (Kyoritsu Shuppan; issued on 1960), pp. 268-270.

Specific examples of suitable amino acids include aspartic acid, glutamic acid, glycine, and serine, with glycine and serine being particularly preferred.

The isoelectric point of amino acid refers to a specific pH at which amino acid carries the same number of positive and negative charges in the molecule and thus has no electric charge at all. The isoelectric point of each amino acid can be determined by isoelectric focusing at low ionic strength.

(3-3) Emulsion Resin

The high refractive index layer or the low refractive index layer according to the present invention may further contain an emulsion resin. The presence of an emulsion resin increases the flexibility of the film to improve the processability, such as attachment to glass.

The emulsion resin refers to a resin in which fine resin particles having, for example, an average particle size of about 0.01 to 2.0 μm are dispersed in an aqueous medium in an emulsion state. The emulsion resin is obtained by emulsion polymerization of oil-soluble monomers with a high-molecular dispersant having a hydroxy group. The type of dispersant used does not make any difference in polymer composition of the resulting emulsion resin. Examples of dispersants used in the emulsion polymerization include low-molecular dispersants, such as alkyl sulfonates, alkylbenzene sulfonates, diethylamine, ethylenediamine, and quaternary ammonium salt, and high-molecular dispersants, such as polyoxyethylene nonylphenyl ether, polyexyethylene lauryl acid ether, hydroxyethyl cellulose, and polyvinylpyrrolidone. The emulsion polymerization using a high-molecular dispersant having a hydroxy group suggests that hydroxy groups reside on at least the surface of fine microparticles. The emulsion resin thus obtained is accordingly different in chemical or physical properties of emulsion from emulsion resin obtained by using other dispersants.

The high molecular dispersant having a hydroxy group refers to a high-molecular dispersant having a weight-average molecular weight of 10,000 or more and substituted with a hydroxy group at its side chain or terminal. Examples of high-molecular dispersants include copolymers of 2-ethylhexyl acrylate with acrylic polymers, such as sodium polyacrylate and polyacrylamide; and polyethers, such as polyethylene glycol and polypropylene glycol.

(3-4) Lithium Compound

In the present invention, at least one of the high refractive index layers and the low refractive index layers may further contain a lithium compound. The viscosity of a coating liquid for the high refractive index layer or a coating liquid for the low refractive index layer containing a lithium compound can be easily controlled, which results in improved production stability when the optical film of the present invention is attached to glass.

Examples of lithium compounds applicable to the present invention include, but are not limited to, lithium carbonate, lithium sulfate, lithium nitrate, lithium acetate, lithium orotate, lithium citrate, lithium molybdate, lithium chloride, lithium hydride, lithium hydroxide, lithium bromide, lithium fluoride, lithium iodide, lithium stearate, lithium phosphate, lithium hexafluorophosphorate, lithium aluminium hydride, lithium triethylborohydride, lithium triethoxyaluminium hydride, lithium tantalate, lithium hypochlorite, lithium oxide, lithium carbonate, lithium nitride, lithium niobate, lithium sulfide, lithium borate, $LiBF_4$, $LiClO_4$, $LiPF_4$, and $LiCF_3SO_3$. These lithium compounds may be used singly or in combination of two or more.

Of these, lithium hydroxide is preferred because it can sufficiently provide the advantageous effects of the present invention.

The amount of the lithium compound added is preferably in the range of 0.005 to 0.05 g, more preferably from 0.01 to 0.03 g per gram of the first or second metal oxide particles present in the high refractive index layer or the low refractive index layer.

(3-5) Other Additives

Various additives that can be added to the high refractive index layer and the low refractive index layer according to the present invention are listed below. Examples of additives include various known additives, such as ultraviolet absorbers described in JP 57-74193 A, JP 57-87988 A, and JP 62-261476 A; fading inhibitors described in, for example, JP 57-74192 A, JP 57-87989 A, JP 60-72785 A, JP 61-146591 A, JP 1-95091 A, JP 3-13376 A; various surfactants, such as anionic, cationic, and nonionic surfactants; fluorescent brightening agents described in, for example, JP 59-42993 A, JP 59-52689 A, JP 62-280069 A, JP 61-242871 A, JP 4-219266 A; pH adjusters, such as sulfuric acid, phosphoric acid, acetic acid, citric acid, sodium hydroxide, potassium hydroxide, and potassium carbonate; defoamers; lubricants, such as diethylene glycol; preservatives, antiseptics, antistatic agents, matting agents, heat stabilizers, antioxidants, flame retardants, nucleating agents, inorganic particles, organic particles, adhesiveness-reducing agents, lubricants, infrared absorbers, dyes, and pigments.

(4) Method for Forming Infrared-Reflecting Layer

A method for forming the infrared-reflecting layer according to the present invention preferably, but not necessarily, includes coating the transparent resin film with a coating liquid for the high refractive index layer and a coating liquid for the low refractive index layer, wherein the coating liquid for the high refractive index layer contains the first water-soluble binder resin and the first metal oxide particles and the coating liquid for the low refractive index layer contains the second water-soluble binder resin and the second metal oxide particles.

Examples of coating methods include, but are not limited to, roller coating, rod-bar coating, air-knife coating, spray coating, slide-type curtain coating, and slide-hopper coating and extrusion coating as described in, for example, U.S. Pat. Nos. 2,761,419 and 2,761,791. The type of multilayer coating may be sequential multilayer coating or may be simultaneous multilayer coating.

Simultaneous multilayer coating by slide-hopper coating, which is a preferred production method (coating method) in the present invention, will be described in detail.

(4-1) Solvent

Solvents for preparing the coating liquid for the high refractive index layer and the coating liquid for the low refractive index layer are preferably, but not necessarily, water, organic solvents, or mixed solvents thereof.

Examples of organic solvents include alcohols, such as methanol, ethanol, 2-propanol, 1-butanol; esters, such as ethyl acetate, butyl acetate, propylene glycol monomethyl ether acetate, and propylene glycol monoethyl ether acetate; ethers, such as diethyl ether, propylene glycol monomethyl ether, ethylene glycol monoethyl ether; amides, such as dimethylformamide and N-methylpyrrolidone; and ketones, such as acetone, methyl ethyl ketone, acetylacetone, and cyclohexanone. These organic solvents may be used singly or may be used as a mixture of two or more.

In particular, water, or a mixed solvent of water with methanol, ethanol, or ethyl acetate is preferred as a solvent for the coating liquids from the viewpoint of environmental aspects and convenience of handling.

(4-2) Concentration for Coating Liquid

The concentration of the first water-soluble binder resin in the coating liquid for the high refractive index layer preferably ranges from 1 to 10 mass%. The concentration of the first metal oxide particles in the coating liquid for the high refractive index layer preferably ranges from 1 to 50 mass%.

The concentration of the second water-soluble binder resin in the coating liquid for the low refractive index layer preferably ranges from 1 to 10 mass%. The concentration of the second metal oxide particles in the coating liquid for the low refractive index layer preferably ranges from 1 to 50 mass%.

In the present invention, the modification of the concentration of each of these materials can change the thermal shrinkage rate of the optical film, so that the value obtained by dividing the thermal shrinkage rate of the optical film by the thermal shrinkage rate of the transparent resin film can be controlled in the range of 1 to 3.

(4-3) Method for Preparing Coating Liquid

A method for preparing the coating liquid for the high refractive index layer and the coating liquid for the low refractive index layer is not limited to particular methods, and includes, for example, adding the water-soluble binder resin, the metal oxide particles, and other additives optionally added, and mixing them with stirring. In this method, the order of addition of the water-soluble binder resin, the metal oxide particles, and other additives optionally used is also not limited either, and the components may be sequentially added with stirring and mixed or may be added together with stirring and mixed. Furthermore, the viscosity of the coating liquid is appropriately adjusted using a solvent, as desired.

In the present invention, the high refractive index layer is preferably formed using an aqueous coating liquid for the high refractive index layer prepared by addition and dispersion of core-shell particles. In this case, the core-shell particles are preferably added to the coating liquid for the high refractive index layer as a sol having a pH in the range of 5.0 to 7.5 and having negative zeta potential to prepare the coating liquid.

(4-4) Viscosity of Coating Liquid

The viscosity of the coating liquid for the high refractive index layer and the coating liquid for the low refractive index layer at 40°C to 45°C when simultaneous multilayer coating is performed by slide hopper coating is preferably in the range of 5 to 300 mPa·s, more preferably in the range of 10 to 250 mPa·s. The viscosity of the coating liquid for the high refractive index layer and the coating liquid for the low refractive index layer at 40°C to 45°C when simultaneous multilayer coating is performed by slide-type curtain coating is preferably in the range of 5 to 1,200 mPa·s, more preferably in the range of 25 to 500 mPa·s.

The viscosity of the coating liquid for the high refractive index layer and the coating liquid for the low refractive index layer at 15°C is preferably 10 mPa·s or more, more preferably in the range of 15 to 30,000 mPa·s, still more preferably in the range of 20 to 20,000 mPa·s, particularly preferably in the range of 20 to 18,000 mPa·s.

(4-5) Coating and Drying Methods

Coating and drying methods preferably, but necessarily, include: heating the coating liquid for the high refractive index layer and the coating liquid for the low refractive index layer to 30°C or more; then subjecting the transparent resin film to simultaneous multilayer coating with the coating liquid for the high refractive index layer and the coating liquid for the low refractive index layer; then once cooling (setting) the formed coating films to preferably 1°C to 15°C; and then drying the films at 10°C or more. More preferably, the drying is performed under the conditions of wet-bulb temperature, 5°C to 50°C and film surface temperature, 10°C to 50°C. In addition, cooling immediately after coating is preferably performed by a horizontal setting manner to improve the evenness of the formed coating films.

The coating thickness of the coating liquid for the high refractive index layer and the coating liquid for the low refractive index layer is set to provide a preferred dry thickness as described above.

As used herein, the setting refers to the step of increasing the viscosity of the coating film composition to decrease the fluidity of materials between the layers and in the layers by means of decreasing the temperature through application of cold air or the like to the coating films. The state of the coating film when nothing sticks to fingers upon contact with the surface of the coating film after application of cold air to the surface of the coating film is defined as the state of set completion.

The time from application of cold air after coating to completion of setting (setting time) is preferably 5 minutes or less, preferably 2 minutes or less. The lower limit of the setting time is not particularly limited, but the setting time preferably takes 45 seconds or more. An insufficient setting time may result in insufficient mixing of components in the layers. In contrast, an excessive setting time may result in advanced interlayer diffusion of the metal oxide particles to cause an insufficient difference in refractive index between the high refractive index layer and the low refractive index layer. If the elasticity of optical film units between the high refractive index layer and the low refractive index layer increases quickly, the setting step needs not be provided.

The setting time can be adjusted by controlling the concentration of the water-soluble binder resin and the concentration of the metal oxide particles, and adding other components, such as various known gelatinizers, such as gelatin, pectin, agar, carrageenan, and gellan gum.

The temperature of cold air is preferably from 0°C to 25°C, more preferably from 5°C to 10°C. The time of exposure of the coating films to cold air, depending on the conveying speed of the coating films, is preferably from 10 to 120 seconds.

<<Other Constitutive Layers of Optical Film>>

The optical film according to the present invention may include, on the transparent resin film, functional layers to impart additional functions, such as a conductive layer, antistatic layer, gas barrier layer, adhesion-promoting layer (adhesive layer), stain-proofing layer, deodorant layer, dripping layer, lubricating layer, hard coat layer, wear resistance layer, anti-reflection layer, electromagnetic wave shielding layer, ultraviolet-absorbing layer, infrared-absorbing layer, printed layer, fluorescent layer, hologram layer, release layer, adhesive layer, adhesive layer, infrared-blocking layer (metal layer, liquid crystal layer) other than the high refractive index layer and the low refractive index layer according to the present invention, and colored layer (visible light-absorbing layer). Preferred functional layers are described below: an infrared-absorbing layer, a heat-insulating layer, and a hard coat layer.

(1) Infrared-Absorbing Layer

The optical film according to the present invention may further include an infrared-absorbing layer. The infrared-absorbing layer is laminated at any position, and preferably laminated below the infrared-reflecting layer when viewed from incident light, more preferably laminated to a different surface of the transparent resin film from the surface on which the infrared-reflecting layer is laminated, in order to efficiently obtain the heat-shielding effect of the laminated glass of the present invention. Alternatively, an infrared absorber may be incorporated into another layer, for example, a hard coat layer, which allows the layer to function as an infrared-absorbing layer.

In the present invention, the thickness per infrared-absorbing layer is preferably in the range of 0.1 to 50 $\mu$m, more preferably in the range of 1 to 20 $\mu$m. The thickness of 0.1 $\mu$m or more tends to improve the infrared absorption capacity; whereas the thickness of 50 $\mu$m or less improves the crack resistance of the coating films.

Examples of materials present in the infrared-absorbing layer include, but are not limited to, an ultraviolet curable resin, a photopolymerization initiator, an infrared absorber.

The ultraviolet curable resin is superior to other resins in hardness and smoothness, and furthermore is also advantageous in dispersibility of ITO, antimony-doped tin oxide (ATO), or thermally-conductive metal oxides. As the ultraviolet curable resin, any ultraviolet curable resin that is cured to form a transparent layer can be used without limitation. Examples of ultraviolet curable resins include silicone resins, epoxy resins, vinyl ester resins, acrylic resins, and allyl ester resins. Acrylic resins are more preferred from the viewpoint of hardness, smoothness, and transparency.

The acrylic resin preferably contains reactive silica particles having on the surface a photosensitive group having photopolymerization reactivity (hereinafter, also simply referred to as "reactive silica particles") as described in WO 2008/035669 from the viewpoint of hardness, smoothness, and transparency. Examples of photosensitive groups exhibiting photopolymerizability here include polymerizable unsaturated groups represented by a (meth)acryloyloxy group. The ultraviolet curable resin may contain a compound photopolymerizable with this photosensitive group having photopolymerization reactivity and introduced to the surface of the reactive silica particles, for example, an organic compound having a polymerizable unsaturated group. Furthermore, silica particles having a polymerizable unsaturated group-modified hydrolyzable silane chemically bonded through a silyloxy group produced between silica particles via hydrolysis reaction of the hydrolyzable silyl group can be also used as reactive silica particles. The average particle size of the reactive silica particles here is preferably from 0.001 to 0.1 $\mu$m. The average particle size in this range can achieve transparency, smoothness, and hardness in a well-balanced manner.

The acrylic resin may include a structural unit derived from a fluorine-containing vinyl monomer in order to adjust the refractive index. Examples of fluorine-containing vinyl monomers include fluoroolefins (e.g., fluoroethylene, vinylidene fluoride, tetrafluoroethylene, hexafluoropropylene), partially or completely fluorinated alkyl ester derivatives of (meth)acrylic acid (e.g., Viscoat 6FM (trade name, available from Osaka Organic Chemical Industry Ltd.), R-2020 (trade name, available from Daikin Industries, Ltd.), and completely or partially fluorinated vinyl ethers.

As the photopolymerization initiator, well-known ones can be used, and may be used singly or in combination of two or more.

Preferred examples of inorganic infrared absorbers present in the infrared-absorbing layer include tin-doped indium oxide (ITO), antimony-doped tin oxide (ATO), zinc antimonate, lanthanum hexaboride ($LaB_6$), cesium-containing tungsten oxide ($Cs_{0.33}WO_3$), from the viewpoint of visible light transmittance, infrared absorbability, and dispersion suitability in resin. These may be used singly or in combination of two or more. The average particle size of the inorganic infrared absorber is preferably from 5 to 100 nm, more preferably from 10 to 50 nm. The average particle size of 5 nm or more can provide good dispersibility in resin and good infrared absorbability. On the one hand, the average particle size of 100 nm or less can provide a desired visible light transmittance. The average particle size can be measured by imaging the particles with a transmission electron microscope, measuring the particle size of, for example, randomly extracted 50 particles, and calculating the average of the measurements. When the particles are not spherical, the average particle size is defined as a value obtained by measuring the major axis of the particles

The content of the inorganic infrared absorber in the infrared-absorbing layer is preferably from 1 to 80 mass%, more preferably from 1 to 50 mass% with respect to the total mass of the infrared-absorbing layer. The inorganic infrared absorber in an amount of 1 mass% or more provides a sufficient infrared absorption effect; whereas the inorganic infrared absorber in an amount of 80 mass% or less allows transmission of a sufficient amount of visible light.

The infrared-absorbing layer may contain other infrared absorbers, such as metal oxides other than those mentioned above, organic infrared absorbers, and metal complexes, provided that the advantageous effects of the present invention can be exerted. Specific examples of other infrared absorbers include diimonium-based compounds, aluminum-based compounds, phthalocyanine-based compounds, organometallic complexes, cyanine-based compounds, azo compounds, polymethine-based compounds, quinone-based compounds, diphenylmethane-based compounds, and triphenylmethane-based compounds.

A method for forming the infrared-absorbing layer is not limited to particular methods, and includes, for example, preparing a coating liquid for the infrared-absorbing layer containing the above components, then applying the coating liquid using a wire bar or the like, and drying the coating liquid to form the infrared-absorbing layer.

(2) Heat-insulating layer

In the present invention, a heat-insulating layer having pores (hereinafter also simply referred to as a heat-insulating layer) is provided on either side of the transparent resin film. The presence of the heat-insulating layer can reduce a risk of what is called heat cracks. It can also improve the heat insulation effect of the laminated glass of the present invention.

The thermal conductivity of the heat-insulating layer according to the present invention is preferably in the range of 0.001 to 0.2 W/(m·K), more preferably in the range of 0. 005 to 0. 15 W/ (m·K). The thermal conductivity of 0.001 W/ (m·K) or more causes some heat transfer and thus thermal diffusion to reduce or prevent damages such as film swelling, peeling, and discoloration. The thermal conductivity of 0.2 W/(m·K) or less minimizes heat transfer or thermal diffusion to effectively reduce conduction of heat to glass, reducing or presenting heat cracks in glass.

The thermal conductivity can be measured using, for example, a hot wire probe-type thermal conductivity tester (available from Kyoto Electronics Manufacturing Co., Ltd., QTM-500).

The porosity of the heat-insulating layer according to the present invention is preferably in the range of 30% to 95%, more preferably in the range of 60% to 95%. The porosity of 30% or more allows the heat-insulating layer to express heat insulation performance to reduce or prevent heat cracks in glass. The porosity of 95% or less maintains the layer structural strength sufficient to avoid disintegration of the structure during handling or the like.

Examples of materials for forming the heat-insulating layer include, but are not limited to, combinations of inorganic oxide particles and polymer binders, and foamed resins.

Known materials can be used as the inorganic oxide particles. Specific examples include silica ($SiO_2$), alumina ($Al_2O_3$), zirconium oxide ($ZrO_2$), zeolite, titanium oxide ($TiO_2$), barium titanate ($BaTiO_3$), strontium titanate ($SrTiO_3$), calcium titanate ($CaTiO_3$), aluminium borate, iron oxide, calcium carbonate, barium carbonate, lead oxide, tin oxide, cerium oxide, calcium oxide, trimanganese tetraoxide, magnesium oxide, niobium oxide, tantalum oxide, tungstic oxide, antimony oxide, aluminum phosphate, calcium silicate, zirconium silicate, ITO, titanium silicate, mesoporous silica (e.g., FSM-16, MCM41), montmorillonite, saponite, vermiculite, hydrotalcite, kaolinite, kanemite, ilerite, magadiite, and kenyaite. These may be used singly or in combination of two or more. Furthermore, complex oxides of these can also be preferably used. Of these, neutral to acidic inorganic oxide particles are preferred from the viewpoint of the strength of the heat-insulating layer. Specifically, zirconium oxide, montmorillonite, saponite, vermiculite, hydrotalcite, kaolinite, kanemite, tin oxide, tungstic oxide, titanium oxide, aluminum phosphate, silica, zinc oxide, or alumina is preferred; and silica particles or alumina particles are more preferred. This is because silica particles or alumina particles are industrially inexpensive and easily available, and the surface of these particles, which have reactive hydroxy groups on the surface, is relatively easily modified with a crosslinkable functional group.

The inorganic oxide particles may be porous. Porous inorganic oxide particles refer to inorganic oxide particles having countless fine pores inside or on the particle surface, wherein the specific surface area of the particles is preferably from 500 to 1,000 $m^2/g$. The specific surface area of 500 $m^2/g$ or more tends to increase the porosity to improve the heat insulation. The specific surface area of 1,000 $m^2/g$ or less tends to improve the strength of the heat-insulating layer.

Preferred examples of such porous inorganic oxide particles include nanometer-sized complex oxide microparticles having a low refractive index in which the surface of porous inorganic oxide particles are coated with silica or the like, as described in JP 7-133105 A; and nanometer-sized silica-based microparticles having pores inside and a low refractive index and composed of silica and inorganic oxides other than silica oxide, as described in JP 2001-233611 A.

The average particle size of the inorganic oxide particles is preferably in the range of 1 to 200 nm. The average particle size of 1 nm or more tends to increase the porosity to improve the heat insulation; whereas the average particle size of 200 nm or less tends to improve the strength of the heat-insulating layer.

The inorganic oxide particles present in the heat-insulating layer may be hollow particles in order to easily control the size of pores or the thickness of the outer covering of the heat-insulating layer structure. Hollow particles used can be obtained, for example, by coating the surface of templates, which are inorganic nanoparticles having a predetermined particle size, with an inorganic oxide using a sol-gel solution of, for example, metal alkoxide or a silane coupling agent or a solution of a reactive resin monomer in which the templates are dispersed, and then melting the inside templates to form hollow particles. The outer covering of the hollow particles may be closed or partially open. As materials used for the outer covering, silica, metal oxides, organic resin materials or the like can be used without limitation, but a silane coupling agent to form silica or organically modified silica is preferably used in order to ensure the mechanical strength of the heat-insulating layer.

The average void size of the hollow particles is preferably 80 nm or less, more preferably 50 nm or less in order to ensure heat insulation and transparency. The average thickness of the outer covering is preferably in the range of 1 to 7 nm, more preferably in the range of 1 to 5 nm. The outer covering having a thickness of 7 nm or less tends to improve the transparency of the heat-insulating layer; whereas the outer covering having a thickness of 1 nm or more tends to increase the mechanical strength of the heat-insulating layer.

The average particle size of these inorganic oxide particles is the volume average value of the diameter of the sphere that has the same volume as each particle (sphere-based particle size), and this value can be obtained by electron microscopic observation. Specifically, this value is obtained by measuring 200 or more inorganic oxide microparticles in a certain field by electron microscopic observation of the inorganic oxide particles to determine the sphere-based particle size of each particle and calculating the average value of the sphere-based particle size.

In the present invention, inorganic oxide particles having the surface modified with a silane coupling agent or the like can be also used. Surface modifying groups used are preferably, but not necessarily, crosslinkable functional groups crosslinkable with nitrogen-containing aromatic polymers having crosslinkable functional groups at the terminal. Examples of crosslinkable functional groups include groups having carbon-carbon unsaturated bonds, such as vinyl group, acrylic group, methacrylic group, and allyl group; cyclic ether groups, such as epoxy group and oxetane group; isocyanate group, hydroxy group, and carboxyl group.

A preferred method for providing a crosslinkable functional group on the surface of the inorganic oxide particles (a method for modifying the surface) is preferably a method for reacting a silane compound having the crosslinkable functional group with the surface of the inorganic oxide particles. Examples of silane compounds having the crosslinkable functional group include monofunctional to trifuctional alkoxy silanes, chlorosilicane compounds having crosslinkable functional groups, and disilazane compounds having crosslinkable functional groups.

The content of the inorganic oxide particles in the heat-insulating layer is preferably, but not necessarily, from 10 to 95 mass%, more preferably from 50 to 90 mass% with respect to the total mass of the heat-insulating layer. The inorganic oxide particles of 10 mass% or more tends to increase the porosity to improve the heat insulation; whereas the inorganic oxide particles of 95 mass% or less tends to improve the mechanical strength of the heat-insulating layer.

When the heat-insulating layer contains inorganic oxide particles, it preferably contains a small amount of a polymer binder from the viewpoint of the flexibility of the coating films and the formation of pores.

Examples of the polymer binder include thermoplastic resins and elastic polymers, specifically emulsions (latexes) and suspensions of water-soluble resins, such as starch, carboxymethyl cellulose, cellulose, diacetyl cellulose, methyl cellulose, hydroxyethyl cellulose, hydroxypropyl cellulose, sodium alginate, polyacrylic acid, sodium polyacrylate, polyvinyl phenol, polyvinyl methyl either, polyvinyl alcohol, polyvinylpyrrolidone, polyacrylonitrile, polyacrylamide, polyhydroxy (meth)acrylate, and styrene-maleic acid copolymer; polyvinyl chloride, polytetrafluoroethylene, polyvinylidene fluoride, tetrafluoroethylene-hexafluoropropylene copolymer, vinylidene fluoride-tetrafluoroethylene-hexafluoropropylene copolymer, polyethylene, polypropylene, ethylene-propylene-diene terpolymer (EPDM), sulfonated EPDM, polyvinyl acetal resin; (meth)acrylate copolymers containing (meth)acrylates, such as methyl metaacrylate, 2-ethylhexyl acrylate; (meth)acrylate-acrylonitrile copolymer; polyvinyl ester copolymers containing vinyl esters, such as vinyl acetate; styrenebutadiene copolymer, acrylonitrile-butadiene copolymer, polybutadiene, neoprene rubber, fluororubber, polyethylene oxide, polyester polyurethane resin, polyether polyurethane resin, polycarbonate polyurethane resin, polyester resin, phenolic resin, epoxy resin, and the like. Of these, water-soluble resins are preferred, and polyvinyl alcohol is more preferably used.

The content of the polymer binder is preferably, but not necessarily, in the range of 5 to 90 mass%, more preferably in the range of 10 to 50 mass% with respect to the total mass of the heat-insulating layer. The polymer binder in an amount of 5 mass% or more tends to increase the flexibility of the heat-insulating layer; whereas the polymer binder in an amount of 90 mass% or less provides porosity to form the heat-insulating layer with higher heat insulation.

Examples of foamed resins used as a material for the heat-insulating layer include foams of, for example, polyolefins, such as polyurethane, polystyrene, polyethylene, and polypropylene; phenolic resin, polyvinyl chloride, urea resin, polyimide, and melamine resin. These may be used singly or in combination of two or more. Of these, foamed polystyrene or foamed polyurethane is preferred from the viewpoint of formability.

The heat-insulating layer may contain a cross-linking agent in order to increase the strength. Cross-linking agents are roughly classified into inorganic and organic ones, and either of them can provide sufficient advantageous effects in the present invention. These cross-linking agents may be used singly or in combination of two or more.

Examples of the inorganic cross-linking agents used include acids having boron atom(s) (e.g., boric acid, orthoboric acid, diboric acid, metaboric acid, tetraboric acid, pentaboric acid) and salts thereof, zinc salts (e.g., zinc sulfate), copper salts (e.g., copper sulfate), zirconium salts (e.g., zirconyl nitrate, zirconyl acetate), aluminum salts (e.g., aluminum sulfate), and titanium salts (e.g., titanium lactate). Of these, preferred inorganic cross-linking agents are acids having boron atom(s) or salts thereof, aluminum salts, and zirconium salts, with zirconium salts being more preferred.

Examples of the organic cross-linking agents include aldehyde-based cross-linking agents (e.g., formalin, glyoxal, dialdehyde starch, polyacrolein, N-methylolurea, N-methylol melamine, N-hydroxylmethyl phthalimide), active vinylbased cross-linking agents (e.g., bis-vinylsulfonylmethyl methane, tetrakis vinylsulfonylmethyl methane, N,N,N-trisacryloyl-1,3,5-hexahydrotriazine), epoxy-based cross-linking agents, polyisocyanate-based cross-linking agents. Of these, polyisocyanate-based cross-linking agents, epoxy-based cross-linking agents, and aldehyde-based cross-linking agents are preferred, and polyisocyanate-based cross-linking agents and epoxy-based curing agents that show good reactivity with a hydroxy group are more preferred.

Epoxy-based cross-linking agents are compounds having at least two glycidyl groups in their molecules, and many epoxy-based cross-linking agents are commercially available, for example, under trade name of Denacol (registered trademark) from Nagase ChemteX Corporation.

Polyisocyanate-based cross-linking agents are compounds having at least two isocyanate groups in their molecules and highly reactive with a hydroxy group or the like. Examples of major isocyanate cross-linking agents include tolylene diisocyanate, diphenylmethane diisocyanate, hexamethylene diisocyanate, isophorone diisocyanate, modifications and prepolymers thereof, multifunctional aromatic isocyanates, aromatic polyisocyanates, multifunctional aliphatic isocyanates, block-type polyisocyanates, and polyisocyanate prepolymers. These polyiasocyanate-based cross-linking agents are detailed in, for example, Handbook of Cross-Linking Agents (published by Taiseisha Ltd., issued on October, 1981).

The inorganic cross-linking agents and the organic cross-linking agents both are preferably used in the range of about 1 to 50 mass%, more preferably in the range of 2 to 40 mass% with respect to the polymer binder from the viewpoint of the strength and flexibility of the heat-insulating layer.

A method for supplying these cross-linking agents to the heat-insulating layer is not limited to particular methods, and for example, the cross-linking agent may be added to a coating liquid for forming the heat-insulating layer or the cross-linking agent may be supplied by providing the heat-insulating layer and then overcoating it with the cross-linking agent. The overcoat with the cross-linking agent may be performed together with or just after the coating with the coating liquid for forming the heat-insulating layer. In this case, the cross-linking agent may be applied with a coater or the like, or by spraying, or by dipping in a solution of the cross-linking agent.

Next, a method for forming the heat-insulating layer is described.

A method for forming the heat-insulating layer according to the present invention is preferably, but not necessarily, a wet coating method when the heat-insulating layer contains inorganic oxide particles and a polymer binder. Specifically, the heat-insulating layer can be formed by mixing inorganic oxide particles, a polymer binder, and optionally a cross-linking agent with a solvent to prepare a coating liquid and then applying the coating liquid to a base, followed by drying.

The solvent can be any solvent that can uniformly disperse the inorganic oxide particles, the polymer binder, and the cross-linking agent. Specifically, one or two or more solvents can be used, including water, methanol, ethanol, 2-propanol, N-methylpyrrolidone, dimethylformamide, dimethylacetamide, and N-dimethylformamide. In this case, various additives may be added in order to stabilize the coating liquid (dispersion). These additives may be any of materials that can be removed by heating but do not damage pores in the porous heat-insulating layer of the present invention.

A coating method using the coating liquid may be any method that enables substantially uniform coating at a desired thickness. Examples of methods include screen printing, bar coating, roll coating, reverse coating, gravure printing, doctor blade coating, die coating. Coating type can be also properly selected to meet various needs, such as continuous coating, intermittent coating, and stripe coating. Furthermore, multilayer coating together with the above infrared-reflecting layer is also feasible.

A drying method af ter coating can be any method that can remove the solvent present in the coating liquid, and various drying methods, such as hot-air drying, infrared drying, far-infrared drying, microwave drying, electron beam drying, vacuum drying, and supercritical drying, can be appropriately selected for use. The drying temperature is preferably, but not necessarily, from 50°C to 400°C, more preferably from 70°C to 150°C.

When a UV-curable cross-linking agent is used, the coating liquid is cured by UV irradiation after application to form the heat-insulating layer.

Examples of methods for forming the heat-insulating layer when the heat-insulating layer contains a foamed resin include, but are not limited to, chemical foaming and physical foaming. For foamed polystyrene as an example, polystyrene and supercritical inert gas of carbon dioxide or the like as a foaming agent may be injected into a supercritical extruder to extrude into a polystyrene sheet having dense, fine foam on the infrared-reflecting layer and thus to form the heat-insulating layer, or other methods may be employed.

The thickness of the heat-insulating layer formed by the above method is preferably, not necessarily, from 100 nm to 200 $\mu$m, more preferably from 100 nm to 20 $\mu$m. The thickness in this range has little effect on film transparency and further allows the heat-insulating layer to exhibit heat insulation.

The heat-insulating layer is provided at at least one side of the transparent resin film, and preferably disposed closer to glass in consideration of the mechanism of heat cracks. Specifically, the heat-insulating layer is preferably disposed between the transparent resin film and glass, more preferably disposed between the infrared-reflecting layer and glass. For the optical film including the infrared-absorbing layer, the heat-insulating layer is preferably disposed between the infrared-absorbing layer and glass.

The porosity of the heat-insulating layer, when the heat-insulating layer contains inorganic oxide particles and a polymer binder, can be controlled by adjusting the content of the inorganic oxide particles and the polymer binder in the heat-insulating layer. When the heat-insulating layer contains a foamed resin, the porosity of the heat-insulating layer can be controlled by controlling the conditions of resin foaming.

(3) Hard Coat Layer

The optical film according to the present invention preferably includes a hard coat layer containing an infrared-absorbing pigment or the like as a surface-protecting layer in order to enhance scratch resistance.

The hard coat layer according to the present invention may be laminated to both sides of the transparent resin film according to the present invention, or may be laminated to one side. Some transparent resin films may have poor adherence to the adhesive layer or may become cloudy when the infrared-reflecting layer is formed on the transparent resin films. The formation of the hard coat layer can solve such problems. In addition, the formation of the hard coat layer can control the stretch of the transparent resin film.

Examples of curable resins used in the hard coat layer include thermosetting resins and ultraviolet-curable resins. Ultraviolet-curable resins are preferred because of easy formability. Of ultraviolet-curable resins, those having a pencil hardness of at least 2H are more preferred. These curable resins may be used singly or in combination of two or more.

Examples of such ultraviolet-curable resins include multifunctional acrylate resins, such as acrylates and methacrylates having polyhydric alcohols; and multifunctional urethane acrylate resins, such as those synthesized from diisocyanates and acrylates and methacrylates having polyhydric alcohols. Additionally, polyether resins having acrylate-based functional groups, polyester resins, epoxy resins, alkyd resins, spiroacetal resins, polybutadiene resins, polythiolpolyene resins, or other resins can be also preferably used.

As reactive diluents of these resins, relatively low viscous compounds can be used, including difunctional and higher-functional monomers and oligomers, such as 1,6-hexanediol di(meth)acrylate, tripropylene glycol di(meth)acrylate, diethylene glycol di(meth)acrylate, hexandiol (meth)acrylate, pentaerythritol tri(meth)acrylate, trimethylolpropane tri(meth)acrylate, dipentaerythritol hexa(meth)acrylate, and neopentyl glycol di(metha)acrylate; and N-vinylpyrrolidone;

and acrylates, such as ethyl acrylate and propyl acrylate; methacrylates, such as ethyl methacrylate, propyl methacrylate, isopropyl methacrylate, butyl methacrylate, hexyl methacrylate, isooctyl methacrylate, 2-hydroxyethyl methacrylate, cyclohexyl methacrylate, nonylphenyl methacrylate; tetrahydrofurfuryl methacrylate, and derivatives thereof such as caprolactone modified products; monofunctional monomers, such as styrene, α-methylstyrene, and acrylic acid. These reactive diluents may be used singly or in combination of two or more.

Furthermore, examples of photosensitizers (radical polymerization initiators) for these resins that can be used include benzoin and alkyl ethers thereof, such as benzoin, benzoin methyl ether, benzoin ethyl ether, benzoin isopropyl ether, and benzyl methyl ketal; acetophenones, such as acetophenone, 2,2-dimethoxy-2-phenylacetophenone, and 1-hydroxycyclohexylphenyl ketone; anthraquinones, such as methyl anthraquinone, 2-ethyl anthraquinone, and 2-amyl anthraquinone; thioxanthones, such as thioxanthone, 2,4-diethylthio xanthone, and 2,4-diisopropyl thioxanthone; ketals, such as acetophenone dimethyl ketal and benzyl dimethyl ketal; benzophenones, such as benzophenone and 4,4-bis methylamino benzophenone; and azo compounds. These may be used singly or in combination of two or more. In addition, these photosensitizers can be used in combination with, for example, photoinitiation aids including tertiary amines such as triethanolamine and methyl diethanolamine; and benzoic acid derivatives such as 2-dimethylaminoethyl benzoic acid and ethyl 4-dimethylaminobenzoate. The amount of these radical polymerization initiators used is from 0.5 to 20 parts by mass, preferably from 1 to 15 parts by mass with respect to 100 parts by mass of polymerizable components in resin.

The above curable resins may contain commonly known coating additives as desired. For example, silicone-based and fluorine-based coating additives to provide leveling properties, surface slip properties, and other properties impart an effect of scratch resistance to the surface of cured films. In addition, the coating additives also bleeds out to the air interface when ultraviolet rays are used as active energy rays, which can reduce inhibition of resin curing by oxygen to provide an effective degree of curing even under the conditions of low radiation intensity.

The hard coat layer preferably contains inorganic microparticles. Preferred examples of inorganic microparticles include microparticles of inorganic compounds containing metals such as titanium, silica, zirconium, aluminum, magnesium, antimony, zinc, and tin. The average particle size of the inorganic microparticles is preferably 1,000 nm or less, more preferably in the range of 10 to 500 nm in order to ensure transmittance of visible light. The inorganic microparticles preferably have a photosensitive group having photopolymerization reactivity such as monofunctional or multifunctional acrylates introduced onto the surface thereof, since a stronger bonding force between the inorganic microparticles and a curable resin for forming the hard coat layer can prevent separation of the inorganic microparticles from the hard coat layer.

The thickness of the hard coat layer is preferably in the range of 0.1 to 50 μm, more preferably in the range of 1 to 20 μm. The thickness of 0.1 μm or more tends to improve the hard coat properties; whereas the thickness of 50 μm or less tends to improve the transparency of the infrared-shielding film.

The hard coat layer may also function as the infrared-absorbing layer described above.

A method for forming the hard coat layer is not limited to particular methods. For example, a coating liquid for the hard coat layer is prepared which contains the above components, and then the coating liquid is applied with a wire bar or the like and then cured by heat and/or UV to form the hard coat layer.

«Adhesive Layer»

In the laminated glass according to the present invention, adhesive layers are provided at both sides of the above optical film to bond the optical film to the glass substrates.

The optical film according to the present invention preferably has an adhesive layer at at least one side of the optical film. The adhesive layer is preferably formed from an adhesive, and examples of adhesives include, but are not limited to, acrylic adhesives, silicone-based adhesives, urethane-based adhesives, polyvinyl butyral-based adhesives, and ethylene-vinyl acetate-based adhesives.

The acrylic adhesives used may be either solvent-based adhesives or emulsion-based adhesives, but solvent-based adhesives are preferred because of easy increase in adhesive force or the like. Of solvent-based adhesives, those obtained by solution polymerization are preferred. Examples of raw materials for producing such solvent-based acrylic adhesives by solution polymerization include acrylates, such as ethyl acrylate, butyl acrylate, 2-ethylhexyl acrylate, and ocryl acrylate, as a main monomer that constitutes the backbone; vinyl acetate, acrylnitrile, styrene, methyl methacrylate, and the like as a comonomer for improving cohesive force; and methacrylic acid, acrylic acid, itaconic acid, hydroxyethyl methacrylate, glycidyl methacrylate, and the like as a functional group-containing monomer for promoting crosslinking, imparting stable adhesive force, and maintaining adhesive force at a certain level even in the presence of water. For the adhesive layer of the laminated film, one having a low glass transition temperature (Tg), such as butyl acrylate, is particularly useful as a main polymer because the adhesive layer of the laminated film requires high tackiness.

The adhesive layer can contain additives, such as a stabilizer, surfactant, ultraviolet absorber, flame retardant, antistatic agent, antioxidant, heat stabilizer, lubricant, filler, coloring agent, and adhesion-regulating agent. The addition of an ultraviolet absorber is also effective for reducing degradation of the infrared-shielding film due to ultraviolet rays particularly when the adhesive layer is used for attachment to windows as in the present invention.

The thickness of the adhesive layer is preferably from 1 $\mu$m to 100 $\mu$m, more preferably from 3 to 50 $\mu$m. The thickness of 1 $\mu$m or more tends to improve the adhesiveness to provide sufficient adhesive force. In contrast, the thickness of 100 $\mu$m or less not only improves the transparency of the infrared-shielding film but also prevents occurrence of cohesive failure between the adhesive layers when the infrared-shielding film is peeled off from the glass substrate after attached to the glass substrate.

A method for forming the adhesive layer on the optical film is not limited to particular methods, and for example, an adhesive coating liquid containing the above adhesive is prepared and then applied to the optical film using a wire bar or the like, followed by drying to produce the optical film having an adhesive layer.

«Glass Substrate»

Next, a glass substrate used in the laminated glass of the present invention is described.

Commercially available glass can be used as a glass substrate according to the present invention. The type of glass is not limited to particular types but in general, soda lime silica glass is preferably used. In this case, glass may be colorless transparent or may be colored transparent.

Of two glass substrates, the outside glass substrate closer to incident light is preferably made of colorless transparent glass. The inside glass substrate remote from incident light is preferably made of green colored transparent glass, deep color transparent glass, or colorless transparent glass. Green colored transparent glass preferably has ultraviolet absorptivity and infrared absorptivity. The use of these substrates allows reflection of solar radiation energy as much as possible on the outside and further can reduce the solar radiation transmittance of the laminated glass.

Examples of suitable green colored transparent glasses include, but are not limited to, soda lime silica glass containing iron. It is exemplified by soda lime silica glass containing 0.3 to 1 mass% of the total iron based on $Fe_2O_3$ in a soda lime silica-based mother glass. Since the absorption of light by divalent iron of the total iron is predominant at wavelengths in the near infrared region, the mass of FeO (divalent iron) is preferably from 20 to 40 mass% of the total iron based on $Fe_2O_3$.

In order to impart ultraviolet absorptivity, for example, cerium or the like is added to a soda lime silica-based mother glass. Specifically, soda lime silica glass substantially having the following composition is preferably used. $SiO_2$: 65 to 75 mass%, $Al_2O_3$: 0.1 to 5 mass%, $Na_2O + K_2O$: 10 to 18 mass%, CaO: 5 to 15 mass%, MgO: 1 to 6 mass%, total iron based on $Fe_2O_3$: 0.3 to 1 mass%, total cerium based on $CeO_2$ and/or $TiO_2$: 0.5 to 2 mass%.

examples of deep color transparent glasses include, but are not limited to, soda lime silica glasses containing iron at high level.

For use of the laminated glass of the present invention for vehicle windows or other windows, the thickness of the inside glass substrate and the outside glass substrate both is preferably from 1.5 to 3.0 mm. In this case, the inside glass substrate and the outside glass substrate may have the same thickness or a different thickness. For use of the laminated glass for car windows, for example, the thickness of the inside glass substrate and the outside glass substrate both may be 2.0 mm or 2.1 mm. For use of the laminated glass for car windows, the laminated glass can have a reduced total thickness and also become resistance to external forces on vehicles when the inside glass substrate has a thickness of less than 2 mm and the outside glass substrate has a thickness of more than 2 mm. The inside glass substrate and the outside glass substrate may be flat or curved. Since vehicle windows, particularly car windows are often curved, the inside glass substrate and the outside glass substrate are often curved. In this case, the optical film is provided on the concave side of the outside glass substrate. Furthermore, three or more glass substrates can also be used as desired.

Examples

Although the present invention will be described below in detail by way of Examples, the present invention is not limited to these. The unit "%" as used in examples means "mass%" unless otherwise specified.

«Production of Laminated Glass 1»

(Preparation of Coating Liquid L1 for Low Refractive Index Layer)

First, 680 parts of a 10 mass% aqueous solution of colloidal silica (available from Nissan Chemical Industries, Ltd., SNOWTEX (registered trademark) OXS) as second metal oxide particles, 30 parts of a 4.0 mass% aqueous solution of polyvinyl alcohol (available from Kuraray Co., Ltd., PVA-103, degree of polymerization: 300, degree of saponification: 98.5 mol%), 150 parts of a 3.0 mass% aqueous solution of boric acid were mixed and dispersed. Pure water was added up to 1,000 parts of a colloidal silica dispersion L1.

Next, the resulting colloidal silica dispersion L1 is heated to 45°C, into which 760 parts of a 4.0 mass% aqueous solution of polyvinyl alcohol (available from Japan Vam & Poval Co., Ltd., JP-45, degree of polymerization: 4500, degree of saponification: 86.5 to 89.5 mol%) as a second water-soluble binder resin is sequentially added with stirring. Then, 40 parts of a 1.0 mass% aqueous solution of betaine-based surfactant (available from Kawaken Fine Chemicals Co., Ltd., Softazoline (trade name) LSB-R) was added to prepare a coating liquid L1 for the low refractive index layer.

(Preparation of Coating Liquid H1 for High Refractive Index Layer)

Titanium oxide hydrate was suspended in water at a concentration of 100 g/L based on $TiO_2$ to prepare an aqueous suspension of titanium oxide. To 10 L (liter) of the suspension, 30 L of an aqueous solution of sodium hydroxide (concentration: 10 mol/L) was added with stirring, and the mixture was heated to 90°C and aged for 5 hours. Next, the mixture was neutralized with hydrochloric acid and filtered, followed by washing with water. In the above reaction (treatment), titanium oxide hydrate as a raw material was obtained by the thermal hydrolysis of an aqueous solution of titanium sulfate according to a known procedure.

The base-treated titanium compound was suspended in purified water at a concentration of 20 g/L based on $TiO_2$. To the suspension, citric acid was added with stirring in an amount of 0.4 mol% to the amount of $TiO_2$. When the sol mixture was then heated to reach 95°C, concentrated hydrochloric acid was added so that the concentration of hydrochloric acid was 30 g/L. The mixture was stirred for 3 hours to prepare a titanium oxide sol while kept at 95°C.

The titanium oxide sol was further dried at 105°C for 3 hours to provide powder microparticles of titanium oxide. The powder microparticles were found to be rutile-type titanium oxide microparticles by X-ray diffraction analysis with JDX-3530 model available from JEOL Ltd. The microparticles had a volume average particle size of 10 nm.

To 4 kg of pure water, a 20.0 mass% titanium oxide sol aqueous dispersion containing the resulting rutile-type titanium oxide microparticles having a volume average particle size of 10 nm is added to provide a sol as core particles.

To 2 kg of pure water, 0.5 kg of a 10.0 mass% titanium oxide sol aqueous dispersion was added and the mixture was heated to 90°C. Next, 1.3 kg of an aqueous solution of silicic acid (prepared to have a concentration of 2.0 mass% based on $SiO_2$) was added gradually and the mixture was heated in an autoclave at 175°C for 18 hours and further concentrated to provide a sol (solid concentration: 20 mass%) of core-shell particles (average particle size: 10 nm) containing titanium oxide having a rutile-type structure as core particles and $SiO_2$ as a coating layer.

A dispersion H1 of core-shell particles was prepared by mixing 28.9 parts of the above prepared sol (solid concentration: 20.0 mass%) containing core-shell particles, 10.5 parts of a 1.92 mass% aqueous solution of citric acid, 2.0 parts of a 10 mass% aqueous solution of polyvinyl alcohol (available from Kuraray Co., Ltd., PVA-103, degree of polymerization: 300, degree of saponification: 98.5 mol%), and 9.0 parts of a 3 mass% solution of boric acid.

Next, while the dispersion H1 of the core-shell particles was stirred, 16.3 parts of pure water and 33.5 parts of a 5.0 mass% aqueous solution of polyvinyl alcohol (available from Kuraray Co., Ltd., PVA-124 (PVA-1), degree of polymerization: 2, 400, degree of saponification: 98 to 99 mol%) as a first water-soluble binder resin was added. Furthermore, 0.5 parts of a 1.0 mass% aqueous solution of betaine-based surfactant (available from Kawaken Fine Chemicals Co., Ltd., Softazoline (trade name) LSB-R) was added and pure water was added up to 1,000 parts of a coating liquid H1 for the high refractive index layer.

(Formation of Infrared-Reflecting Layer)

Simultaneous multilayer coating was carried out with a slide hopper coater capable of multilayer coating. In the simultaneous multilayer coating, 11 layers of six low refractive index layers and five high refractive index layers were alternately laminated to a polyethylene terephthalate film (available from Toyobo Co., Ltd., Cosmo Shine A4300 (PET-1)) as a transparent resin film of 50 μm in thickness heated to 45°C so that the high refractive index layer and the low refractive index layer each had a dry thickness of 130 nm, while the coating liquid L1 for the low refractive index layer and the coating liquid H1 for the high refractive index layer as prepared above were kept at 45°C.

Just after coating, the layers were set by blowing cold air at 5°C. The time until nothing sticks to fingers upon contact with the surface (setting time) was 5 minutes. Next, after completion of setting, the layers were dried by blowing hot air at 80°C to form an infrared-reflecting layer composed of 11 layers on one side of the transparent resin film.

An optical film 1 was accordingly produced.

The thermal shrinkage rate A of the transparent resin film was measured as below.

Specifically, the transparent resin film was stored under the conditions of temperature 23°C and relative humidity (RH) 55% for 24 hours. Two marks are then made at 100 mm intervals in the width direction, and the distance $L_1$ between these two marks is measured under no-load conditions with a microscope or the like. Next, the transparent resin film is hung in an oven under a 110°C atmosphere and allowed to stand for 5 minutes. After 5 minutes elapse, the transparent resin film is taken out of the oven and stored again under the conditions of temperature 23°C and relative humidity (RH) 55% for 24 hours. Next, the distance $L_2$ between two marks in the transparent resin film under no-load conditions is measured with a microscope or the like. The thermal shrinkage rate of the transparent resin film is calculated from the measured distances $L_1$ and $L_2$ in accordance with the following equation.

$$\text{Thermal shrinkage rate (\%)} = ((L_1 - L_2) / L_1) \times 100$$

The thermal shrinkage rate B of the optical film is calculated in the same manner.

(Bonding between Optical Film and Glass Substrate)

Next, a 3-mm-thick green glass (visible light transmittance Tv: 81%, solar transmittance Te: 63%) as an inside glass, a 380 $\mu$m-thick polyvinyl butyral film as an inside adhesive layer, the optical film 1 prepared above, a 380 $\mu$m-thick polyvinyl butyral film as an outside adhesive layer, and 3-mm-thick clear glass (visible light transmittance Tv: 91%, solar transmittance Te: 86%) as an outside glass were laminated in this sequence. The excess part out from the edge of the glass was removed, and the laminate was then heated at 140°C for 30 minutes and bonded together by pressure degassing to produce a laminated glass 1.

<<Production of Laminated Glass 2>>

An optical film 2 was produced in the same manner as in the production of the laminated glass 1 except that the infrared-reflecting layers were provided at both sides of the transparent resin film; and a laminated glass 2 was further produced.

«Production of Laminated Glass 3»

An optical film 3 was produced in the same manner as in the production of the laminated glass 1 except that a polyethylene terephthalate film (available from Mitsubishi Plastics Industries, Ltd., DIAFOIL T900E50 series (PET-2)) was used instead of PET-1 as a transparent resin film; and a laminated glass 3 was further produced.

<<Production of Laminated Glass 4»

An optical film 4 was produced in the same manner as in the production of the laminated glass 1 except that PET-2 was used instead of PET-1 as a transparent resin film and the infrared-reflecting layers were provided at both sides of the transparent resin film; and a laminated glass 4 was further produced.

<<Production of Laminated Glass 5>>

An optical film 5 was produced in the same manner as in the production of the laminated glass 1 except that PET-2 was used instead of PET-1 as a transparent resin film, the number of low refractive index layers in each of infrared-reflecting layers was changed into 12 and the number of high refractive index layers into 11, and a laminated glass 5 was further produced.

<<Production of Laminated Glass 6>>

An optical film 6 was produced in the same manner as in the production of the laminated glass 1 except that PET-2 was used instead of PET-1 as a transparent resin film, the number of low refractive index layers in each of infrared-reflecting layers was changed into 12 and the number of high refractive index layers into 11, and the infrared-reflecting layers were provided at both sides of the transparent resin film; and a laminated glass 6 was further produced.

<<Production of Laminated Glass 7»

An optical film 7 was produced in the same manner as in the production of the laminated glass 1 except that PET-2 was used instead of PET-1 as a transparent resin film, the number of low refractive index layers in each of infrared-reflecting layers was changed into 16 and the number of high refractive index layers into 15, and the infrared-reflecting layers were provided at both sides of the transparent resin film; and a laminated glass 7 was further produced.

<<Production of Laminated Glass 8>>

An optical film 8 was produced in the same manner as in the production of the laminated glass 1 except that PET-2 was used instead of PET-1 as a transparent resin film, the number of low refractive index layers in each of infrared-reflecting layers was changed into 21 and the number of high refractive index layers into 20, and the infrared-reflecting layers were provided at both sides of the transparent resin film; and a laminated glass 8 was further produced.

<<Production of Laminated Glass 9>>

An optical film 9 was produced in the same manner as in the production of the laminated glass 1 except that PET-2 was used instead of PET-1 as a transparent resin film, the number of low refractive index layers in each of infrared-reflecting layers was changed into 5 and the number of high refractive index layers into 4, and the infrared-reflecting layers were provided at both sides of the transparent resin film; and a laminated glass 9 was further produced.

<<Production of Laminated Glass 10>>

An optical film 10 was produced in the same manner as in the production of the laminated glass 1 except that PET-2 was used instead of PET-1 as a transparent resin film, polyvinyl alcohol (available from Kuraray Co., Ltd., PVA EXCEVAL RS1117 (PVA-2)) was used instead of PVA-1 as a first water-soluble binder resin, the number of low refractive index layers in each of infrared-reflecting layers was changed into 12 and the number of high refractive index layers into 11, and the infrared-reflecting layers were provided at both sides of the transparent resin film; and a laminated glass 10 was further produced.

<<Production of Laminated Glass 11>>

An optical film 11 was produced in the same manner as in the production of the laminated glass 1 except that PVA-2 was used instead of PVA-1 as a first water-soluble binder resin, the number of low refractive index layers in each of infrared-reflecting layers was changed into 12 and the number of high refractive index layers into 11, and the infrared-reflecting layers were provided at both sides of the transparent resin film; and a laminated glass 11 was further produced.

<<Production of Laminated Glass 12>>

An optical film 12 was produced in the same manner as in the production of the laminated glass 1 except that triacetyl cellulose (available from Konica Minolta Inc., KM4∪A (TAC)) was used instead of PET-1 as a transparent resin film, PVA-2 was used instead of PVA-1 as a first water-soluble binder resin, and the infrared-reflecting layers were provided at both sides of the transparent resin film; and a laminated glass 12 was further produced.

<<Production of Laminated Glass 13»

An optical film 13 was produced in the same manner as in the production of the laminated glass 1 except that TAC was used instead of PET-1 as a transparent resin film, PVA-2 was used instead of PVA-1 as a first water-soluble binder resin, the number of low refractive index layers in each of infrared-reflecting layers was changed into 12 and the number of high refractive index layers into 11, and the infrared-reflecting layers were provided at both sides of the transparent resin film; and a laminated glass 13 was further produced.

«Production of Laminated Glass 14»

An optical film 14 was produced in the same manner as in the production of the laminated glass 1 except that gelatin (available from Nitta Gelatin Inc., gelatin for fine chemicals) was used instead of PVA-1 as a first water-soluble binder resin, the number of low refractive index layers in each of infrared-reflecting layers was changed into 12 and the number of high refractive index layers into 11, and the infrared-reflecting layers were provided at both sides of the transparent resin film; and a laminated glass 14 was further produced.

<<Production of Laminated Glass 15»

Transparent resin film PET-1, 1,000 mm × 1,000 mm × 100 μm thick, was washed and dried, and then placed in a sputter coating device. On the surface of the transparent resin film, 11 $TiO_2$ films of 105 nm in thickness as high refractive index layers and 11 $SiO_2$ films of 175 nm in thickness as low refractive index layers were alternately laminated to form an infrared-reflecting layer, whereby an optical film 15 was produced.

To the produced optical film 15, glass substrates were bonded in the same manner as in the production of the laminated glass 1 to produce the laminated glass 15.

<<Production of Laminated Glass 16>>

An optical film 16 was produced in the same manner as in the production of the laminated glass 15 except that the number of low refractive index layers in an infrared-reflecting layer was changed into 5 and the number of high refractive index layers into 5, and a laminated glass 16 was further produced.

<<Production of Laminated Glass 17»

An optical film 17 was produced in the same manner as in the production of the laminated glass 15 except that PET-2 was used instead of PET-1 as a transparent resin film; and a laminated glass 17 was further produced.

<<Production of Laminated Glass 18>>

An optical film 18 was produced in the same manner as in the production of the laminated glass 1 except that PET-2 was used instead of PET-15 as a transparent resin film, the number of low refractive index layers in an infrared-reflecting layer was changed into 5 and the number of high refractive index layers into 5, and a laminated glass 18 was further produced.

«Evaluation on Optical Films 1 to 18 and Laminated Glasses 1 to 18»

The conditions in the production of the optical films 1 to 18 and the laminated glasses 1 to 18 are described in Table 1.

The optical films 1 to 18 produced as described above were heated in the same conditions as in the bonding to glass substrates (at 140°C for 30 minutes). Before and after the heating, the infrared reflectance (%) measurement, haze measurement, crack evaluation, and cross cut adhesion test were carried out as described below.

Similarly, the laminated glasses 1 to 18 produced as described above were also subjected to the infrared reflectance measurement, haze measurement, and crack evaluation. The evaluation results are shown in Table 2.

(1) Infrared Reflectance Measurement

The infrared reflectance of the optical films 1 to 18 in the 800 to 1400 nm region was measured using a spectrophotometer (with an integrating sphere, available from Hitachi, Ltd., U-4000 model), and the average value was calculated as the infrared reflectance (%).

(2) Haze Measurement

The haze was measured using a haze meter (available from Nippon Denshoku Industries Co., Ltd., NDH2000 model) in accordance with JIS K-7136.

(3) Crack Evaluation

The optical films 1 to 18 and the laminated glasses 1 to 18 before and after heating were stored under the conditions of temperature 23°C and relative humidity (RH) 55% for 24 hours, followed by visual observation of cracks.

⊙: No cracks
○: About 0% to 10% of crack area in the total area
Δ: About 10% to 30% of crack area in the total area
x: About 30% to 50% of crack area in the total area
xx: About 50% or more of crack area in the total area

(4) Cross Cut Adhesion Test

The tape peel test of cross cut of 100 grid squares was carried out in accordance with JIS K-5400, and the film adhesion was evaluated on the basis of the following criteria.

⊙: No grid square removed
○: 1 to 5 grid squares removed
Δ: 6 to 10 grid squares removed
✕: 11 to 20 grid squares removed
✕✕: 21 or more grid squares removed

⊙: No grid square removed
○: 1 to 5 grid squares removed
Δ: 6 to 10 grid squares removed
✕: 11 to 20 grid squares removed
✕✕: 21 or more grid squares removed

[Table 1]

| SAMPLE | TRANSPARENT RESIN FILM | | INFRARED-REFLECTING LAYER | | | | | | OPTICAL FILM | THERMAL SHRINKAGE RATE B/THERMAL SHRINKAGE RATE A | NOTE |
| | MATERIAL | THERMAL SHRINKAGE RATE A (%) | BOTTOM LAYER | TOTAL NUMBER OF LAYERS/SIDE | TOP LAYER | POSITION | FIRST WATER-SOLUBLE BINDER RESIN | FORMATION METHOD | THERMAL SHRINKAGE RATE B (%) | | |
|---|---|---|---|---|---|---|---|---|---|---|---|
| 1 | PET-1 | 0.16 | Si | 11 | Si | ONE SIDE | PVA-1 | SLIDE COATER | 0.70 | 4.3 | COMPARATIVE EXAMPLE |
| 2 | PET-1 | 0.16 | Si | 11 | Si | BOTH SIDES | PVA-1 | SLIDE COATER | 1.00 | 6.25 | COMPARATIVE EXAMPLE |
| 3 | PET-2 | 0.41 | Si | 11 | Si | ONE SIDE | PVA-1 | SLIDE COATER | 0.60 | 1.5 | INVENTION |
| 4 | PET-2 | 0.41 | Si | 11 | Si | BOTH SIDES | PVA-1 | SLIDE COATER | 0.80 | 1.95 | INVENTION |
| 5 | PET-2 | 0.41 | Si | 23 | Si | ONE SIDE | PVA-1 | SLIDE COATER | 0.80 | 1.95 | INVENTION |
| 6 | PET-2 | 0.41 | Si | 23 | Si | BOTH SIDES | PVA-1 | SLIDE COATER | 1.00 | 2.4 | INVENTION |
| 7 | PET-2 | 0.41 | Si | 31 | Si | BOTH SIDES | PVA-1 | SLIDE COATER | 1.23 | 3 | INVENTION |
| 8 | PET-2 | 0.41 | Si | 41 | Si | BOTH SIDES | PVA-1 | SLIDE COATER | 1.30 | 3.2 | COMPARATIVE EXAMPLE |
| 9 | PET-2 | 0.41 | Si | 9 | Si | BOTH SIDES | PVA-1 | SLIDE COATER | 0.60 | 1.5 | INVENTION |
| 10 | PET-2 | 0.41 | Si | 23 | Si | BOTH SIDES | PVA-2 | SLIDE COATER | 0.41 | 1 | INVENTION |
| 11 | PET-1 | 0.16 | Si | 23 | Si | BOTH SIDES | PVA-2 | SLIDE COATER | 0.39 | 2.4 | INVENTION |
| 12 | TAC | 0.05 | Si | 11 | Si | BOTH SIDES | PVA-2 | SLIDE COATER | 0.10 | 2 | INVENTION |
| 13 | TAC | 0.05 | Si | 23 | Si | BOTH SIDES | PVA-2 | SLIDE COATER | 0.15 | 3 | INVENTION |

EP 2 980 034 A1

29

| SAMPLE | TRANSPARENT RESIN FILM | | INFRARED-REFLECTING LAYER | | | | | | OPTICAL FILM | THERMAL SHRINKAGE RATE B/THERMAL SHRINKAGE RATE A | NOTE |
|---|---|---|---|---|---|---|---|---|---|---|---|
| | MATERIAL | THERMAL SHRINKAGE RATE A (%) | BOTTOM LAYER | TOTAL NUMBER OF LAYERS/SIDE | TOP LAYER | POSITION | FIRST WATER-SOLUBLE BINDER RESIN | FORMATION METHOD | THERMAL SHRINKAGE RATE B (%) | | |
| 14 | PET-1 | 0.16 | Si | 23 | Si | BOTH SIDES | GELATIN | SLIDE COATER | 0.16 | 1 | INVENTION |
| 15 | PET-1 | 0.16 | Ti | 22 | Si | ONE SIDE | - | SPUTTERING | 0.20 | 1.25 | COMPARATIVE EXAMPLE |
| 16 | PET-1 | 0.16 | Ti | 10 | Si | ONE SIDE | - | SPUTTERING | 0.15 | 0.9 | COMPARATIVE EXAMPLE |
| 17 | PET-2 | 0.41 | Ti | 22 | Si | ONE SIDE | - | SPUTTERING | 0.20 | 0.5 | COMPARATIVE EXAMPLE |
| 18 | PET-2 | 0.41 | Ti | 10 | Si | ONE SIDE | - | SPUTTERING | 0.15 | 0.36 | COMPARATIVE EXAMPLE |

[Table 2]

| SAMPLE | OPTICAL FILM (BEFORE HEATING) | | | | OPTICAL FILM (AFTER HEATING) | | | | LAMINATED GLASS | | | NOTE |
|---|---|---|---|---|---|---|---|---|---|---|---|---|
| | INFRARED RE-FLECTANCE (%) | HAZE (%) | CRACKS | CROSSCUT ADHESION TEST | INFRARED RE-FLECTANCE (%) | HAZE (%) | CRACKS | CROSSCUT ADHESION TEST | INFRARED RE-FLECTANCE (%) | HAZE (%) | CRACKS | |
| 1 | 45 | 5 | × | △ | 40 | 7 | × | × | 30 | 7 | × | COMPARATIVE EXAMPLE |
| 2 | 50 | 10 | × | △ | 43 | 13 | ×× | × | 37 | 13 | × | COMPARATIVE EXAMPLE |
| 3 | 55 | 0.8 | ⊙ | ⊙ | 56 | 0.9 | ○ | ○ | 56 | 0.9 | ○ | INVENTION |
| 4 | 65 | 0.9 | ⊙ | ⊙ | 66 | 1 | ○ | ○ | 66 | 1 | ○ | INVENTION |
| 5 | 90 | 0.9 | ⊙ | ⊙ | 89 | 0.9 | ○ | ⊙ | 89 | 0.9 | ⊙ | INVENTION |
| 6 | 92 | 1 | ⊙ | ⊙ | 91 | 1.1 | ○ | ⊙ | 91 | 1.1 | ⊙ | INVENTION |
| 7 | 93 | 1.1 | ⊙ | ⊙ | 92 | 1.3 | ○ | ⊙ | 92 | 1.3 | ⊙ | INVENTION |
| 8 | 93 | 1.5 | × | × | 89 | 2 | × | △ | 83 | 2.3 | × | COMPARATIVE EXAMPLE |
| 9 | 55 | 0.9 | ○ | ○ | 53 | 1 | ○ | ○ | 53 | 1 | ○ | INVENTION |
| 10 | 93 | 0.9 | ⊙ | ⊙ | 93 | 0.9 | ⊙ | ⊙ | 93 | 0.9 | ⊙ | INVENTION |
| 11 | 93 | 0.7 | ⊙ | ⊙ | 93 | 0.8 | ⊙ | ⊙ | 93 | 0.8 | ○ | INVENTION |
| 12 | 54 | 0.6 | ○ | ○ | 53 | 0.7 | ○ | ○ | 53 | 0.7 | ○ | INVENTION |
| 13 | 93 | 0.8 | ○ | ○ | 91 | 0.9 | ○ | ○ | 91 | 0.9 | ○ | INVENTION |
| 14 | 92 | 1.2 | ○ | ○ | 90 | 1.3 | ○ | ○ | 90 | 1.3 | ○ | INVENTION |
| 15 | 85 | 1.2 | ○ | ○ | 83 | 1.4 | △ | △ | 80 | 1.4 | × | COMPARATIVE EXAMPLE |
| 16 | 45 | 1 | × | × | 41 | 1.5 | × | × | 37 | 1.7 | × | COMPARATIVE EXAMPLE |
| 17 | 80 | 1.8 | × | × | 76 | 2.5 | × | × | 70 | 2.7 | × | COMPARATIVE EXAMPLE |
| 18 | 40 | 1.7 | × | × | 37 | 2.4 | × | × | 35 | 2.7 | × | COMPARATIVE EXAMPLE |

The results of Table 2 show that the optical films according to the present invention exhibit little reduction in infrared reflectance or increase in haze even after heating under the same conditions as in the production of the laminated glasses, wherein the optical films according to the present invention have infrared-reflecting layer(s) including a laminate of alternating high refractive index layers and low refractive index layers that contain metal oxide particles and a water-soluble binder resin, and the value obtained by dividing the thermal shrinkage rate of the optical film by the thermal shrinkage rate of the transparent resin film ranges from 1 to 3. The optical films according to the present invention are also found to have few cracks in the infrared-reflecting layer(s) even after heating, which maintains high adhesion between the constitutive layers.

Furthermore, the laminated glasses according to the present invention including such optical films are found to have high infrared reflectance and low haze and contain no cracks in the infrared-reflecting layer(s).

The present invention accordingly can provide a laminated glass with good infrared reflectance and light transmission while delamination between constitutive layers and cracks in the infrared-reflecting layer(s) due to heating can be prevented in the laminated glass.

Industrial Applicability

As described above, the present invention is suitable for providing a laminated glass with good infrared reflectance and light transmission while delamination between constitutive layers and cracks in the infrared-reflecting layer(s) due to heating can be prevented in the laminated glass.

Reference Signs List

1    Laminated Glass
2    Optical Film
3    Transparent Resin Film
4    Infrared-Reflecting Layer
5    High Refractive Index Layer
6    Low Refractive Index Layer
7A   Adhesive Layer
7B   Adhesive Layer
8A   Glass Substrate
8B   Glass Substrate

**Claims**

1.  A laminated glass, comprising:

    an optical film having at least one infrared-reflecting layer on a transparent resin film; and
    a pair of glass substrates that sandwich the optical film, wherein
    the infrared-reflecting layer includes a laminate of alternating high refractive index layers containing a first water-soluble binder resin and first metal oxide particles and low refractive index layers containing a second water-soluble binder resin and second metal oxide particles, and
    the value obtained by dividing the thermal shrinkage rate of the optical film by the thermal shrinkage rate of the transparent resin film ranges from 1 to 3.

2.  The laminated glass according to claim 1, wherein the infrared-reflecting layers are provided at both sides of the transparent resin film.

3.  The laminated glass according to claim 1 or 2, wherein the total number of the high refractive index layers and the low refractive index layers alternately laminated is from 11 to 31.

4.  The laminated glass according to any one of claims 1 to 3, wherein the first water-soluble binder resin is ethylene-modified polyvinyl alcohol.

## FIG. 1

## INTERNATIONAL SEARCH REPORT

| International application No. |
| --- |
| PCT/JP2014/057303 |

A. CLASSIFICATION OF SUBJECT MATTER
*C03C27/12*(2006.01)i, *B60J1/00*(2006.01)n

According to International Patent Classification (IPC) or to both national classification and IPC

B. FIELDS SEARCHED

Minimum documentation searched (classification system followed by classification symbols)
C03C27/12, B60J1/00

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2012-081748 A (Toray Industries, Inc.), 26 April 2012 (26.04.2012), the entire specification (Family: none) | 1-4 |
| A | WO 2011/078137 A1 (Asahi Glass Co., Ltd.), 30 June 2011 (30.06.2011), the entire description & US 2012/0276374 A1 & CN 102666422 A | 1-4 |
| A | JP 2010-215493 A (Mitsubishi Plastics, Inc.), 30 September 2010 (30.09.2010), the entire specification (Family: none) | 1-4 |

[×] Further documents are listed in the continuation of Box C.     [ ] See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 22 April, 2014 (22.04.14) | 13 May, 2014 (13.05.14) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
|---|
| PCT/JP2014/057303 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2010/090250 A1  (Central Glass Co., Ltd.), 12 August 2010 (12.08.2010), the entire description & JP 2010-180089 A       & US 2011/0287229 A1 & EP 2394971 A1          & CN 102307824 A | 1-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004026547 A
- JP 2007148330 A
- JP 61010483 A
- JP 1206088 A
- JP 61237681 A
- JP 63307979 A
- JP 7285265 A
- JP 7009758 A
- JP 8025795 A
- JP 57014091 A
- JP 60219083 A
- JP 60219084 A
- JP 61020792 A
- JP 61188183 A
- JP 63017807 A
- JP 4093284 A
- JP 5278324 A
- JP 6092011 A
- JP 6183134 A
- JP 6297830 A
- JP 7081214 A
- JP 17101142 A

- JP 7179029 A
- JP 7137431 A
- WO 9426530 A
- JP 57074193 A
- JP 57087988 A
- JP 62261476 A
- JP 57074192 A
- JP 57087989 A
- JP 60072785 A
- JP 61146591 A
- JP 1095091 A
- JP 3013376 A
- JP 59042993 A
- JP 59052689 A
- JP 62280069 A
- JP 61242871 A
- JP 4219266 A
- US 2761419 A
- US 2761791 A
- WO 2008035669 A
- JP 7133105 A
- JP 2001233611 A

**Non-patent literature cited in the description**

- **T. H. JAMES.** The Theory of Photographic Process. Macmillan, 1977, 55
- Scientific Photography Manual. Maruzen, vol. 1, 72-75
- Fundamentals of Photographic Engineering - Silver Halide Photography. Corona Publishing, 119-124

- *Gelatins include those described in Research Disclosure,* December 1978, vol. 176, 17643
- Biochemistry Dictionary. Food Industry. Tokyo Kagaku Dojin Publishing, 1988, vol. 31, 21
- Encyclopedia of Chemistry. Kyoritsu Shuppan, 1960, vol. 1, 268-270
- Handbook of Cross-Linking Agents. Taiseisha Ltd, October 1981